# EUROPÄISCHE PATENTSCHRIFT

(11) **EP 2 322 907 B1**
(45) Veröffentlichungstag und Bekanntmachung des Hinweises auf die Patenterteilung: **28.02.2018**
(21) Anmeldenummer: 09014262.1
(22) Anmeldetag: 14.11.2009
(51) Int. Cl.: G01M 11/00, G01B 11/30, G01N 15/08, G01N 21/88

(54) **Verfahren zum Detektieren der Stirnseitigen Randflächen von Hohlfasern sowie Verfahren zum Detektieren der Innenräume von nicht verstopften Hohlfasern eines Bündels von Hohlfasern**
Method for detecting the front lateral faces of hollow fibres and method for detecting the interior of unstuffed hollow fibres of a bundle of hollow fibres
Procédé de détection des surfaces de bord du côté de la façade de fibres creuses, ainsi que procédé de détection de l'espace intérieur de fibres creuses non obstruées d'un faisceau de fibres creuses

(43) Veröffentlichungstag der Anmeldung: 18.05.2011
(73) Patentinhaber: VMT Vision Machine Technic Bildverarbeitungssysteme GmbH, 68199 Mannheim (DE)
(72) Erfinder: Grünewald, Frank, 69488 Birkenau (DE); Hinkelmann, Andreas, 69469 Weinheim (DE); Mikeska, Harald, 68782 Brühl (DE); Rieger, Christian, 67434 Neustadt (DE); Edelmann, Markus, 66646 Marpingen (DE); Ruppenthal, Alexander, 66625 Nohfelden (DE)
(74) Vertreter: Hamel, Armin

(56) Entgegenhaltungen:
- EP-A2- 1 744 141
- WO-A1-02/06798
- DE-A1- 10 249 850
- DE-A1- 19 534 716
- DE-A1-102006 044 307
- JP-A- 2004 113 894
- US-B1- 6 552 783
- US-B1- 6 757 065

## Beschreibung

### Technisches Gebiet:

Die Erfindung betrifft ein Verfahren zum Detektieren der Innenräume von nicht verstopften Hohlfasern, welche Bestandteile eines Bündels von Hohlfasern sind, wobei
- das Bündel eine Stirnfläche und eine Hinterfläche aufweist,
- die Hohlfasern aus einem ersten Material, insbesondere Kunststoff wie z.B. Polysulfon oder sonstiger Polymer, bestehen und von der Stirnfläche bis mindestens zur Hinterfläche des Bündels verlaufen,
- die Stirnfläche gemeinsam gebildet ist durch die stirnseitigen Randflächen der Hohlfasern und die stirnseitige Oberfläche einer Bindemasse, welche
- ebenfalls Bestandteil des Bündels ist und aus einem zweiten Material, insbesondere Kunststoff wie z.B. Polyurethanharz oder Polyurethan, besteht,
- sich im Bereich zwischen der Stirnfläche und der Hinterfläche zwischen den Hohlfasern befindet
- und in welche die Hohlfasern wenigstens in diesem Bereich eingebettet sind,
- und die stirnseitige Oberfläche der Bindemasse so glatt ist, dass die Bindemasse auf die Stirnfläche eingestrahltes Prüflicht zumindest teilweise glänzend und höchstens teilweise diffus reflektiert,

### Stand der Technik:

Bündel von Hohlfasern werden insbesondere medizinisch als Dialysefilter zum Filtern von Blut eingesetzt. Derartige Filter weisen in der Regel tausende von im wesentlichen parallel verlaufenden Hohlfasern auf, welche zumindest in ihren Endbereichen in eine zwischen den Hohlfasern befindliche Bindemasse eingebettet sind. Die Anzahl der Hohlfasern in einem derartigen Faserbündel kann z.B. typischerweise bei 10.000 bis 16.000 liegen. Die Bindemasse dient dazu, die Hohlfasern aneinander zu fixieren und das Filter abzudichten. In der Regel ist die Bindemasse eine erstarrte Vergussmasse aus Polyurethanharz. Die Hohlfasern sind kapillarartige enge Röhren bzw. Schläuche und bestehen vorzugsweise aus Polysulfon. Die Bindemasse besteht vorzugsweise aus Polyurethanharz.

Zur Herstellung von derartigen Dialysefiltern werden tausende von solchen Hohlfasern zu einem Bündel zusammengefasst und in beiden Endbereichen mit flüssiger bzw. zähflüssiger Bindemasse vergossen. Nach Erstarrung der Bindemasse bildet diese in jedem Endbereich je einen (in der Regel zylindrischen) Block, durch welchen die Hohlfasen im wesentlichen parallel zueinander in axialer Richtung verlaufen, wobei die Endbereiche der Hohlfasern auf Grund des Vergusses in den Block eingebettet sind. Zwischen den Blöcken verlaufen die Hohlfasern ohne Bindemasse.

Durch den Verguss mit Bindemasse wird zumindest ein Teil der Enden der Hohlfasern mit Bindemasse überdeckt. Die Bindemasse dringt beim Verguss von den Enden der Hohlfasern her auch eine gewisse Strecke in die Innenräume der Hohlfasern ein und bildet darin nach der Erstarrung Pfropfen. Nach dem Verguss sind daher die Enden vieler oder aller Hohlfasern mit Bindemasse verstopft.

Daher werden die Blöcke nach Erstarrung der Bindemasse entlang einer auf dem Umfang bzw. der Mantelfläche des Blocks verlaufenden kreisförmigen Schnittlinie mit einem Schneidmesser aufgeschnitten, wobei der Schnitt senkrecht zur Achse des Blocks und der Hohlfasern erfolgt. Mit anderen Worten wird von jedem Block eine äußere, stirnseitige, im wesentlichen scheibenförmige Deckschicht abgeschnitten. Bei dem Schnitt werden die Endbereiche der Hohlfasern zwangsläufig mit abgeschnitten, d.h. die in die Bindemasse eingebetteten Hohlfasern werden gekürzt, so dass im von dem Schnitt betroffenen Endbereich jeder Hohlfaser eine neue, ringförmige Oberfläche freigelegt wird, deren Form dem Querschnitt der Hohlfaser entspricht. Diese durch den Schnitt freigelegten endseitigen Oberflächen der Hohlfasern werden im folgenden als die stirnseitigen Randflächen der Hohlfasern bezeichnet.

Die Dicke der abzuschneidenden stirnseitigen Deckschicht wird so gewählt, dass durch den Schnitt in der Regel die Überdeckung der Hohlfaserenden mit Bindemasse und auch die Endebereiche der Hohlfasern, die mit Pfropfen aus in die Hohlfasern eingedrungener Bindemasse verstopft sind, entfernt werden, so dass die meisten Hohlfasern nach dem Schnitt frei, d.h. unverstopft sind und mit ihren nun offenen Enden in die durch den Schnitt freigelegte neue stirnseitige Oberfläche des Blocks einmünden. Diese neu freigelegte Oberfläche bildet zusammen mit den stirnseitigen Randflächen der Hohlfasern eine im wesentlichen ebene Oberfläche, welche im folgenden als Stirnfläche bezeichnet wird.

Es kommt nun aber mit einer gewissen Wahrscheinlichkeit vor, dass Bindemasse beim Verguss so tief in den Innenraum einer Hohlfaser eingedrungen ist, dass der verstopfte Bereich der Hohlfaser beim Schnitt nicht in voller Tiefe abgeschnitten wird, so dass das Ende der Hohlfaser auch nach dem Schnitt noch mit einem Rest von Bindemasse verstopft ist.

Der Dialysefilter kann seine Aufgabe nur dann befriedigend erfüllen, wenn er eine ausreichende Zahl von Hohlfasern aufweist. Es ist daher wünschenswert, die Hohlfasern, z.B. ihre stirnseitigen Randflächen, mittels eines geeigneten automatischen Verfahrens zu detektieren, insbesondere um eine Information darüber zu gewinnen, wie viele Hohlfasern das Bündel enthält.

Verstopfte Hohlfasern tragen nichts zur Wirkung des Dialysefilters bei. Der Dialysefilter kann seine Aufgabe ferner nur dann befriedigend erfüllen, wenn eine ausreichende Zahl von Hohlfasern bzw. ein hinreichend großer Bruchteil derselben nicht verstopft ist. Wenn mehr als ein bestimmter Bruchteil oder mehr als eine bestimmte Anzahl der Hohlfasern verstopft ist, kann bzw. darf der Dialysefilter nicht verwendet werden. Es ist daher ferner wünschenswert, die unverstopften Hohlfasern mittels eines geeigneten automatischen Verfahrens zu detektieren, z.B. um sie vollautomatisch zählen zu können.

Die EP 1 744 141 A1 offenbart ein Verfahren zur Prüfung eines Hohlfaserbündels, wobei eine Stirnfläche des Bündels mit rotem sowie mit grünem Licht beleuchtet wird, wobei das rote Licht nahezu senkrecht und das grüne Licht schräg eingestrahlt wird. Mit Hilfe einer Zeilenkamera werden durch eine Schlitzblende hindurch zwei Bilder aufgenommen, nämlich ein so genanntes Lochbild und ein so genanntes Faserbild.

Die JP 2004 113894 offenbart ein Verfahren, mit welchem bei der Herstellung eines Hohlfasermoduls festgestellt werden kann, ob und ggf. in welchem Ausmaß eine Faser verstopft ist, und des weiteren festgestellt werden kann, ob ein Modul defekt ist.

Um bei der optischen Inspektion einer an sich ebenen Oberfläche mechanische Fehlstellen wie Einsenkungen und Erhebungen, die bei schräger Bestrahlung zu Schlagschatten führen, von entsprechend kontrastreichen Oberflächen-Musterungen wie der Maserung von Holz unterscheiden zu können, schlägt die DE 195 34 716 A1 eine Bestrahlung gleichzeitig aus unterschiedlichen Richtungen, beispielsweise mit unterschiedlichen Lichtfarben, vor. Zur Vermeidung von Schlagschatten werden deshalb zwei Lichtquellen genutzt, die schräg aus entgegengesetzter Richtung auf die abzubildende Oberfläche strahlen. Die DE 102006044307 A1 befasst sich ebenfalls mit der multisensoriellen Inspektion von Naturholzoberflächen unter Verwendung einer UV-Lichtquelle und einer Kamera.

WO 02/06798 A1 zeigt eine Lichtquelle, die aus einer Vielzahl von Einzellichtquellen besteht und zur Beleuchtung von Prüfgegenständen dient.

US 6 552 783 B1 befasst sich mit Problemen bei der Beurteilung und Erkennung von Bauteilen auf Leiterplatten. Dabei ist das optische System so gewählt, dass es dreidimensionale Messungen auf den geprüften Leiterplatten erlaubt, bei denen die Bauteile wesentliche Höhenunterschiede aufweisen können.

### Technische Aufgabe:

Der Erfindung liegt die Aufgabe zu Grunde, eine Möglichkeit zu schaffen, die Hohlfasern eines Hohlfaserbündels, insbesondere eines Dialysefilters, automatisch zu detektieren oder zu zählen, und/oder die unverstopften Hohlfasern des Hohlfaserbündels automatisch zu detektieren oder zu zählen.
[A1] Die Aufgabe wird erfindungsgemäß gelöst durch ein gattungsgemäßes Verfahren nach Anspruch 1 gelöst, das durch folgende Schritte gekennzeichnet ist:
   d) mittels einer Prüflichtquelle (PQ1,PQ2), welche aus einer einzigen oder einer Mehrzahl von Einzel-Prüflichtquellen besteht, die ihr Licht ungerichtet in einen Halbraum unter der Prüflichtquelle (PQ1) abstrahlen, und wobei als Prüflichtquelle (PQ1,PQ2) eine flächig ausgedehnte Lichtquelle (PQ1,PQ2) verwendet wird, welche von jedem Punkt der Stirnfläche (SF1,SF2) aus gesehen in ihrer Gesamtheit eine Einhüllende aufspannen, die unter einem Öffnungswinkel (alpha) von wenigstens 60° oder wenigstens 35° oder wenigstens 30° erscheint und Prüflicht (PL1,PL2,PL3) erzeugt, wird die Stirnfläche (SF1,SF2) beleuchtet,
   e) mittels einer Prüfkamera (PK) wird Prüflicht (PL1,PL2,PL3) nach dessen glänzender Reflexion an der stirnseitigen Oberfläche der Bindemasse (BM) erfasst und auf diese Weise mittels der Prüfkamera (PK) ein Glanzlichtbild (GLB1,GLB2) der Stirnfläche (SF1,SF2) erzeugt, in welchem die Innenräume (H) von nicht verstopften Fasern (F) dunkler erscheinen als die stirnseitige Oberfläche der Bindemasse (BM) sowie insbesondere auch dunkler als die Innenräume von solchen Hohlfasern (F), welche im Bereich der Stirnfläche (SF1,SF2) mit Bindemasse (BM) verstopft sind,
   f) die Bilder (H') der Innenräume (H) von nicht verstopften Hohlfasern (F) werden anhand dieser Abdunklung im Glanzlichtbild (GLB1,GLB2) automatisch mittels Bildverarbeitung detektiert oder detektiert und gezählt.

Unter diffuser Reflexion wird hierbei verstanden, dass das Licht bei der Reflexion nicht glänzend reflektiert, sondern gestreut wird, dass also gerichtet einfallendes Licht isotrop oder gemäss einer kontinuierlichen zweidimensionalen statistischen Verteilung der Ausfallswinkel reflektiert wird.

Durch die Detektion bzw. Zählung der stirnseitigen Randflächen der Hohlfasern sind implizit auch die Hohlfasern selbst detektiert bzw. gezählt.
[A2] In vorteilhafter Ausgestaltung des Verfahrens ist vorgesehen, dass zum Detektieren der stirnseitigen Randflächen von Hohlfasern, die Hohlfasern an ihren stirnseitigen Randflächen Testlicht, welches auf die Stirnfläche eingestrahlt wird, mit einer ersten Albedo A1 diffus reflektieren, und die Bindemasse auf die Stirnfläche eingestrahltes Testlicht mit einer zweiten Albedo A2, welche kleiner ist als die erste Albedo A1, diffus reflektiert, so dass A1 >A2 gilt, wobei - entweder nach dem Verfahren von Anspruch 1,
   - oder vor dem Verfahren von Anspruch 1,
   - oder gleichzeitig mit dem Verfahren von Anspruch 1
   - oder zeitlich überlappend mit dem Verfahren von Anspruch 1, folgende Schritte durchgeführt werden:
      a) mittels einer Testlichtquelle, welche aus einer einzigen oder einer Mehrzahl von Einzel-Prüflichtquellen besteht und Testlicht erzeugt, wird die Stirnfläche beleuchtet,
      b) mittels einer Testkamera wird Testlicht nach dessen diffuser Reflexion an der Stirnfläche erfasst und auf diese Weise ein Diffuslichtbild der Stirnfläche erzeugt, in welchem die stirnseitigen Randflächen der Hohlfasern wegen A1>A2 heller erscheinen als die Bindemasse,
      c) die Bilder der stirnseitigen Randflächen der Hohlfasern werden anhand dieser Aufhellung im Diffuslichtbild automatisch mittels Bildverarbeitung detektiert oder detektiert und gezählt werden.

Unter glänzender Reflexion wird hierbei verstanden, dass das Gesetz Lichteinfallswinkel = Lichtausfallswinkel gilt.
[A5] Das Testlicht ist bevorzugt Licht einer Testwellenlänge µ. Ebenso ist das Prüflicht bevorzugt Licht einer Prüfwellenlänge λ.

Das Bündel kann insbesondere ein Dialysefilter oder Teil eines solchen sein.
[A15] Bevorzugt bestehen die Hohlfasern aus Polysulfon oder überwiegend aus Polysulfon oder aus einem Polymer oder überwiegend aus einem Polymer oder aus einem ersten Kunststoff. Die Bindemasse besteht bevorzugt aus Polyurethan oder überwiegend aus Polyurethan oder aus Polyurethanharz oder überwiegend aus Polyurethanharz oder aus einem zweiten Kunststoff.

Das Verfahren nach Anspruch 1 und die Ausgestaltung nach Anspruch 2 können zeitlich in beliebiger Reihenfolge nacheinander oder gleichzeitig oder zeitlich überlappend ausgeführt werden.
[A3] Gemäss einer besonders vorteilhaften Variante der Erfindung wird das Bündel von Hohlfasern sowohl dem Verfahren von Anspruch 1, d.h. dem Verfahren 1, als auch dem Verfahren von Anspruch 2 unterzogen und die Ergebnisse der Verfahren miteinander verglichen oder verknüpft werden. Durch Vergleich bzw. Verknüpfung der Ergebnisse beider Verfahren kann vorteilhafterweise insbesondere festgestellt werden, ob Hohlfasern des Bündels im Bereich einer Stirnfläche des Bündels durch Bindemasse verstopft sind.

Diese Variante des Verfahrens dient somit insbesondere zum Prüfen eines Bündels von Hohlfasern, insbesondere eines Dialysefilters, darauf, ob Hohlfasern im Bereich einer Stirnfläche des Bündels durch Bindemasse verstopft sind.

Die Verfahrensschritte a) bis f) können beispielsweise auch in der Reihenfolge a), d), b), e), c), f) oder in der Reihenfolge d), a), e), b), f), c) ausgeführt werden. Weitere Reihenfolgen sind möglich.

Mit den stirnseitigen Randflächen der Hohlfasern sind deren stirnseitigen Grenzflächen gemeint; diese weisen in der Regel die Form von Kreisringen auf, deren Breite der Materialstärke der Hohlfaser und deren Durchmesser dem Durchmesser der Hohlfasern entspricht. Die Form der stirnseitigen Randflächen entspricht der Querschnittsform der Hohlfasern.

Die Albedo ist ein Maß für das diffuse Rückstrahlvermögen eines Materials bei Einstrahlung von Licht, welches z.B. UV-Licht sein kann, und ist in der Regel abhängig von der Wellenlänge. Die Albedo einer Fläche bei einer Wellenlänge x ist definiert durch das Verhältnis der Intensität der diffusen Ausstrahlung dieser Fläche bei der Wellenlänge x zur Intensität der Einstrahlung bei der Wellenlänge x auf diese Fläche.

Die diffuse Reflexion kann hierbei allein an der Oberfläche des Materials oder, bei transparentem Material, zusätzlich auch in tieferen Schichten des Materials z.B. an eingelagerten Streuzentren erfolgen. Auch diffuse Reflexion im Materialinneren trägt also bei transparentem, aber z.B. trübem Material zur Albedo bei. Sehr glatte Oberflächen, welche den größten Teil des eingestrahlten Lichts spiegelnd reflektieren, besitzen demnach selbst dann, wenn sie für spiegelnde Reflexion ein hohes Reflexionsvermögen aufweisen, nur eine geringe Albedo, da zu dieser nicht der spiegelnd (glänzend) reflektierte Anteil des eingestrahlten Lichts, sondern nur der diffus reflektierte Anteil des eingestrahlten Lichts beiträgt.

Das Prüflicht kann UV-Licht, insbesondere UV-A-Licht sein und insbesondere im Wellenlängenbereich von 320...400nm liegen. Das Prüflicht braucht nicht monochromatisch zu sein, sondern kann ein Gemisch verschiedener Wellenlängen und/oder ein Kontinuum von Wellenlängen enthalten. In diesem Fall wird gemäß einer bevorzugten Variante im Lichtweg des Prüflichts, insbesondere zwischen dem Bündel und der Prüfkamera, ein Bandpassfilter angeordnet, dessen Transmission für die Prüfwellenlänge λ maximal ist.

Auch das Testlicht kann UV-Licht, insbesondere UV-A-Licht sein und im Wellenlängenbereich von 320...400nm liegen. Auch das Testlicht braucht nicht monochromatisch zu sein, sondern kann ein Gemisch verschiedener Wellenlängen und/oder ein Kontinuum von Wellenlängen enthalten. In diesem Fall wird gemäß einer bevorzugten Variante im Lichtweg des Testlichts, insbesondere zwischen dem Bündel und der Testkamera, ein Bandpassfilter angeordnet, dessen Transmission für die Testwellenlänge µ maximal ist.

[A4] Gemäß einer bevorzugten Variante des erfindungsgemäßen Verfahrens wird die Zahl der mit Bindemasse verstopften Hohlfasern bestimmt, indem die im Glanzlichtbild ermittelte Zahl von nicht verstopften Hohlfasern von der im Diffuslichtbild ermittelten Zahl von Hohlfasern subtrahiert wird. Das Ergebnis kann als quantitatives Qualitätskriterium für den Zustand des Bündels herangezogen werden.
[A4] Gemäß einer anderen bevorzugten Variante des erfindungsgemäßen Verfahrens wird der relative Anteil der nicht mit Bindemasse verstopften Hohlfasern an der Gesamtzahl der Hohlfasern bestimmt, indem die im Glanzlichtbild ermittelte Zahl von nicht verstopften Hohlfasern durch die im Diffuslichtbild ermittelte Zahl von Hohlfasern dividiert wird. Auch das so erhaltene Ergebnis kann als quantitatives Qualitätskriterium für den Zustand des Bündels herangezogen werden.
[A4] Gemäß einer weiteren bevorzugten Variante des erfindungsgemäßen Verfahrens wird der relative Anteil der mit Bindemasse verstopften Hohlfasern an der Gesamtzahl der Hohlfasern bestimmt, indem die Differenz zwischen der im Diffuslichtbild ermittelten Zahl von Hohlfasern und der im Glanzlichtbild ermittelten Zahl von nicht verstopften Hohlfasern durch die im Diffuslichtbild ermittelte Zahl von Hohlfasern dividiert wird. Auch das so erhaltene Ergebnis kann als quantitatives Qualitätskriterium für den Zustand des Bündels herangezogen werden.
[A6] Die Testwellenlänge µ kann von der Prüfwellenlänge λ verschieden sein. Im Lichtweg des Prüflichts kann ein optisches Filter eingebracht sein, welches für die Prüfwellenlänge λ eine höhere Transmission aufweist als für die Testwellenlänge. Ebenso kann im Lichtweg des Testlichts ein optisches Filter eingebracht sein, welches umgekehrt für die Testwellenlänge µ eine höhere Transmission aufweist als für die Prüfwellenlänge λ. Die optischen Filter können insbesondere der Prüfkamera bzw. der Testkamera optisch vorgeschaltet sein. Die optischen Filter können insbesondere zwischen dem Bündel und der Prüfkamera bzw. zwischen dem Bündel und der Testkamera in den Lichtweg des Prüflichts bzw. des Testlichts eingebracht sein.
[A6] Das Testlicht und das Prüflicht können unterschiedlich polarisiert sein bzw. entlang ihres Lichtweges durch je ein in den Lichtweg des Prüflichts und des Testlichts eingebrachtes Polarisationsfilter unterschiedlich polarisiert werden, z.B. in unterschiedlichen Richtungen linear polarisiert oder in gegensätzlichem Drehsinn zirkular polarisiert. Der Prüfkamera kann ein Polarisationsfilter vorschaltet sein, welches für das polarisierte Prüflicht hohe oder maximale Transmission und für das polarisierte Testlicht geringere oder minimale Transmission aufweist. Ebenso kann der Testkamera ein Polarisationsfilter vorschaltet sein, welches für das polarisierte Testlicht hohe oder maximale Transmission und für das polarisierte Prüflicht geringere oder minimale Transmission aufweist.

Bei linearer Polarisation des Prüflichts und des Testlichts werden deren Polarisationsrichtungen bevorzugt senkrecht zueinander gewählt.
[A7] Bevorzugt wird das Prüflicht unter einem Elevationswinkel von mindestens 60°, besonders bevorzugt von mindestens 75°, auf die Stirnfläche eingestrahlt. Das Testlicht wird bevorzugt unter einem Elevationswinkel von höchstens 60°, besonders bevorzugt von höchstens 45° oder von höchstens 30° oder von höchstens 20°, auf die Stirnfläche eingestrahlt. Unter dem Elevationswinkel wird der Winkel zwischen einfallendem Lichtstrahl und der Oberfläche, auf welche der Lichtstrahl auftrifft, verstanden.
[A8] Das zweite Material und die Prüfwellenlänge λ werden bevorzugt so gewählt, dass der Extinktionskoeffizient der Bindemasse bei der Prüfwellenlänge λ größer ist als 0,1/cm. Besonders bevorzugt werden das zweite Material und die Prüfwellenlänge λ so gewählt, dass der Extinktionskoeffizient der Bindemasse bei der Prüfwellenlänge λ größer ist als 1/cm oder sogar größer ist als 10/cm. Der auch als Schwächungskoeffizient bezeichnete Extinktionskoeffizient a ist ein Maß für die Schwächung beim Durchgang von Licht durch ein Medium und ist definiert durch die e-Funktion l(d)=lₒ*exp(-a*d), wobei d der im Medium zurückgelegte Lichtweg, lₒ eine beliebige Intensität am Ort d=0 und I die Intensität am Ort d ist.
[A8] Das zweite Material und die Testwellenlänge µ werden bevorzugt so gewählt, dass der Extinktionskoeffizient der Bindemasse bei der Testwellenlänge µ größer ist als 0,1/cm. Besonders bevorzugt werden das zweite Material und die Testwellenlänge µ so gewählt, dass der Extinktionskoeffizient der Bindemasse bei der Testwellenlänge größer ist als 1/cm oder sogar größer ist als 10/cm.
[A9] Das erste Material, das zweite Material und die Testwellenlänge µ werden bevorzugt so gewählt, dass die erste Albedo A1 bei der Testwellenlänge µ um mindestens einen Faktor 1.1, besonders bevorzugt um mindestens einen Faktor 1.5 oder einen Faktor 2, größer ist als die zweite Albedo A2. Das erste Material und die Testwellenlänge µ werden bevorzugt so gewählt, dass die erste Albedo A1 bei der Testwellenlänge µ mindestens 10%, besonders bevorzugt mindestens 20% beträgt.
[A10] Bevorzugt werden die Prüfwellenlänge λ und die Testwellenlänge µ identisch gewählt oder so gewählt, dass sie sich um weniger als 10%, besonders bevorzugt um weniger als 1% unterscheiden.
[A11] Gemäß einer Variante des Verfahrens liegt die Prüfwellenlänge λ zwischen 360nm und 380nm und/oder die Testwellenlänge µ zwischen 360nm und 380nm. Beispielsweise können die Prüfwellenlänge λ und die Testwellenlänge µ jeweils zwischen 362nm und 370nm oder jeweils zwischen 363nm und 368nm liegen und insbesondere jeweils 365nm betragen.
[A12] Gemäß einer bevorzugten Variante des Verfahrens sind die Prüfkamera und die Testkamera identisch, d.h. es wird bevorzugt dieselbe Kamera als Prüfkamera und als Testkamera benutzt.

Gemäß einer Variante wird ein Strahlteiler verwendet, welcher so angeordnet ist, dass das Prüflicht über den Strahlteiler auf die Stirnfläche und von dort erneut über den Strahlteiler in die Prüfkamera gelangt.

Das Prüflicht kann insbesondere ein Ringlicht sein. Ebenso kann das Testlicht insbesondere ein Ringlicht sein. Die Prüflichtquelle kann insbesondere ringförmig sein oder aus ringförmig angeordneten Einzellichtquellen bestehen. Ebenso kann die Testlichtquelle ringförmig sein oder aus ringförmig angeordneten Einzellichtquellen bestehen. Die Prüflichtquelle kann eine oder mehrere UV-Leuchtdioden aufweisen. Ebenso kann die Testlichtquelle eine oder mehrere UV-Leuchtdioden aufweisen.

Gemäß einer sehr vorteilhaften Variante der Erfindung wird die Anzahl der im Glanzlichtbild detektierten, nicht mit Bindemasse verstopften Hohlfasern mittels Bildverarbeitung gezählt, vorzugsweise automatisch.

Gemäß einer ebenfalls sehr vorteilhaften Variante der Erfindung wird die Gesamtzahl der im Diffuslichtbild detektierten Hohlfasern mittels Bildverarbeitung gezählt, vorzugsweise automatisch.
[A13] Vorzugsweise wird ein optisches Bandpassfilter, insbesondere Schmalbandfilter, oder ein anderes wellenlängenselektives optisches Filter verwendet, welches für Licht der Testwellenlänge µ durchlässig und zwischen dem Bündel und der Testkamera in den Lichtweg des Testlichts eingebracht ist, so dass nur solches Testlicht, welches dieses Filter durchlaufen hat, zum Diffuslichtbild beiträgt. Das Filter kann insbesondere der Testkamera optisch vorgeschaltet sein.

Das zwischen dem Bündel und der Testkamera in den Lichtweg des Testlichts eingebrachte Filter ist für Licht der Testwellenlänge µ durchlässig bzw. weist für das Testlicht eine hohe Transmission auf und weist zumindest für bestimmte andere Wellenlängen eine geringe Transmission auf oder sperrt für diese Wellenlängen. Mit Hilfe eines solchen Filters können zur Kontrastverbesserung des Diffuslichtbildes unerwünschte bzw. störende Wellenlängen, z.B. Fremdlicht oder Fluoreszenzlicht, weitgehend herausgefiltert werden.
[A13] Vorzugsweise wird ein optisches Bandpassfilter, insbesondere Schmalbandfilter, oder ein anderes ein wellenlängenselektives optisches Filter verwendet, welches für Licht der Prüfwellenlänge λ durchlässig ist und zwischen dem Bündel und der Prüfkamera in den Lichtweg des Prüflichts eingebracht ist, so dass nur solches Prüflicht, welches dieses Filter durchlaufen hat, zum Glanzlichtbild beiträgt. Das Filter kann insbesondere der Prüfkamera optisch vorgeschaltet sein.

Das zwischen dem Bündel und der Prüfkamera in den Lichtweg des Prüflichts eingebrachte Filter ist für Licht der Prüfwellenlänge λ durchlässig bzw. weist für das Prüflicht eine hohe Transmission auf und weist zumindest für bestimmte andere Wellenlängen eine geringe Transmission auf oder sperrt für diese Wellenlängen. Mit Hilfe eines solchen Filters können zur Kontrastverbesserung des Glanzlichtbildes unerwünschte bzw. störende Wellenlängen, z.B. Fremdlicht oder Fluoreszenzlicht, weitgehend herausgefiltert werden.
[A14] Bevorzugt ist zwischen dem Bündel und der Testkamera in den Lichtweg des Testlichts ein solches optisches Filter eingebracht, welches bei einer zwischen 350nm und 380nm liegenden Wellenlänge maximale Transmission aufweist und bei einer Wellenlänge von 460nm sperrt oder eine Transmission aufweist, welche höchstens 50% oder höchstens 10% der maximalen Transmission beträgt. Mit einem derartigen Filter kann Fluoreszenzlicht, welches durch Testlicht einer Testwellenlänge von z.B. µ=365nm in aus Polysulfon bestehenden Hohlfasern angeregt wird, abgeschwächt bzw. unterdrückt werden, wodurch der Kontrast des Diffuslichtbildes angehoben wird.
[A14] In den Lichtweg des Prüflichts kann zwischen dem Bündel und der Prüfkamera ein solches optisches Filter eingebracht sein, welches bei einer zwischen 350nm und 380nm liegenden Wellenlänge maximale Transmission aufweist und bei einer Wellenlänge von 460nm sperrt oder eine Transmission aufweist, welche höchstens 50% oder höchstens 10% der maximalen Transmission beträgt.
[A16] Nach Durchführung des Verfahrens von Anspruch 1, d.h. des Verfahrens 1, kann das Bündel um einen bestimmten Winkel um seine Längsachse gedreht und dann das Verfahren 1 erneut durchgeführt werden. Danach kann das Bündel erneut und einen Winkel im seine Längsachse gedreht und ein weiterer Durchgang des Verfahrens 1 durchgeführt werden, usw.

Ebenso kann nach Durchführung des Verfahrens von Anspruch 2, d.h. des Verfahrens 2, das Bündel um einen bestimmten Winkel um seine Längsachse gedreht und dann das Verfahren 2 erneut durchgeführt werden. Danach kann das Bündel erneut und einen Winkel im seine Längsachse gedreht und ein weiterer Durchgang des Verfahrens 2 durchgeführt werden, usw.

Die Ergebnisse der durchgeführten Durchgänge des Verfahrens 1 können miteinander verglichen oder verknüpft werden; ebenso können die Ergebnisse der durchgeführten Durchgänge des Verfahrens 2 miteinander verglichen oder verknüpft werden. Auf diese Weise kann redundante Information gewonnen werden, und es kann die Gefahr von Fehldetektionen der bei Erfassung der stirnseitigen Randflächen der Hohlfasern bzw. der unverstopften Hohlfasern erheblich verringert und somit die Zuverlässigkeit der Prüfung des Bündels durch Vergleich oder Verknüpfung der Ergebnisse der einzelnen Durchgänge des Verfahrens 1 bzw. 2 erhöht werden.

Falls keine Fehldetektion erfolgt ist, ergeben sich für alle Winkelstellungen übereinstimmend die gleichen Ergebnisse, d.h. die erfindungsgemäßen Verfahren arbeiten rotaionsinvariant.
[A17] Vorzugsweise ist die Testkamera so angeordnet, dass kein an der stirnseitigen Oberfläche der Bindemasse glänzend reflektiertes Testlicht in die Testkamera gelangt.
[A18] Gemäß einer sehr vorteilhaften Variante der Erfindung ist die Testwellenlänge µ von der Prüfwellenlänge λ verschieden, wobei
   - im Lichtweg des Testlichts ein wellenlängenselektives optisches Filter, insbesondere Bandpass- oder Schmalbandfilter, eingebracht ist, welches Licht der Testwellenlänge µ zu mindestens einem Prozentsatz x1 transmittiert und Licht der Prüfwellenlänge λ zu höchstens einem Prozentsatz x2 transmittiert, wobei x2 < 0,5 ∗ x1 ist, und
   - im Lichtweg des Prüflichts ein wellenlängenselektives optisches Filter, insbesondere Bandpass- oder Schmalbandfilter, eingebracht ist, welches Licht der Prüfwellenlänge λ zu mindestens einem Prozentsatz y1 transmittiert und Licht der Testwellenlänge µ zu höchstens einem Prozentsatz y2 transmittiert, wobei y2 < 0,5 ∗ y1 ist,
   und der Schritt a) zeitgleich oder zeitlich überlappend mit dem Schritt d) und/oder der Schritt b) zeitgleich oder zeitlich überlappend mit dem Schritt e) ausgeführt wird.

Gemäß dieser Variante ist es vorteilhaft möglich, gleichzeitig mit Testlicht und mit Prüflicht zu arbeiten, wobei jeweils durch eines der optischen Filter Testlicht weitgehend von der Prüfkamera und Prüflicht weitgehend von der Testkamera ferngehalten wird. Bevorzugt werden die optischen Filter so gewählt, dass x2 < 0,1 ∗ x1 und y2 < 0,1 ∗ y1 ist.
[A19] Als Prüflichtquelle wird bevorzugt eine flächig ausgedehnte Lichtquelle verwendet, welche von jedem Punkt der Stirnfläche aus gesehen unter einem Öffnungswinkel von wenigstens 60° oder wenigstens 35° oder wenigstens 30° erscheint.
[A20] Insbesondere kann als Prüflichtquelle eine solche Lichtquelle verwendet werden, welche eine Mehrzahl oder Vielzahl von Einzellichtquellen aufweist, welche in ihrer Gesamtheit eine Einhüllende aufspannen, die von jedem Punkt der Stirnfläche aus gesehen unter einem Öffnungswinkel α von wenigstens 60° oder wenigstens 35° oder wenigstens 30° erscheint.
[A22] Bevorzugt wird als Prüflichtquelle eine Lichtquelle mit einer Aussparung A oder einem Durchbruch verwendet, um welche bzw. um welchen sich die Prüflichtquelle ringförmig oder kreisringförmig erstreckt. Bevorzugt wird Prüflichtquelle hierbei so angeordnet, dass der Durchbruch bzw. die Aussparung von jedem Punkt der Stirnfläche aus gesehen unter einem Öffnungswinkel φ von höchstens 40° oder höchstens 25° erscheint.
[A23] Bevorzugt wird die Prüfkamera so angeordnet, dass sie bzw. ihr Objektiv durch den Durchbruch oder die Aussparung hindurch auf die Stirnfläche blickt.
[A21] Gemäß einer Variante existiert innerhalb der Einhüllenden bis auf die mögliche zentrale Aussparung A kein nichtleuchtender Bereich, welcher von einem beliebigen Punkt der Stirnfläche aus gesehen unter einem Öffnungswinkel ϕ erscheint, welcher größer ist als 10° oder größer als 5° oder größer als 3°.

Die folgenden Ausführungen beziehen sich auf Varianten der Erfindung.

### 1. Aufgabenstellung:

Aufgabenstellung: 2 Prüfaufgaben ("Lokalisieren und Zählen der Fasern" und "Klassifizieren der Fasern nach offen / geschlossen")

### 2. Prüfobjekt (Dialysator-Schnittfläche) Eigenschaften:

Die Fasern (Kapillaren) sind im Bereich der Schnittfläche vollständig von der Vergussmasse umschlossen (inhomogenes Material). Die Fasern sind zur Schnittfläche senkrecht bis leicht schräg orientiert. Im Normalfall sind die Kapillaren innen offen (Luft). Fehlerhafte Fasern sind mit der Vergussmasse verschlossen.

### 2.1. Fasern:

Die Fasern bestehen aus Polysulfon (PSU), einem eigentlich transparenten Polymer. Aufgrund des Herstellungsprozesses ist ihre Oberfläche mikroskopisch rau. Sie erscheint weiß matt, d.h. sie reflektiert stark und diffus. Die Absorption im UV-A-Bereich beginnt ab einer Wellenlänge von 360 nm und erreicht bei 330 nm ein Maximum. Die absorbierte Strahlungsenergie wird teilweise als Fluoreszenzemission im sichtbaren Bereich um 460 nm abgegeben und führt zu einer Aufhellung aus der Tiefe der Vergussbereichs.

### 2.2. Vergussmasse:

Die Vergussmasse besteht aus Polyurethanharz (PU) und ist hoch transparent im Bereich des sichtbaren Lichts. Die Absorption im UV-A-Bereich beginnt ab einer Wellenlänge von 380 nm und erreicht bei 360 nm ein Maximum.

### 2.3. Wechselwirkungen:

In den Vergussbereich eindringende Strahlung wird an den Faseroberflächen/wandungen reflektiert und beleuchtet somit benachbarte Fasern (Streuung durch die Makrostruktur des inhomogenen Materials). Da die Fasern nicht genau senkrecht bzw. in Richtung des Abbildungsstrahlengangs verlaufen führt dies zu einer kontrastmindernden Aufhellung der Schnittflächenabbildung.

### 2.4. Oberflächeneigenschaften der Schnittfläche:

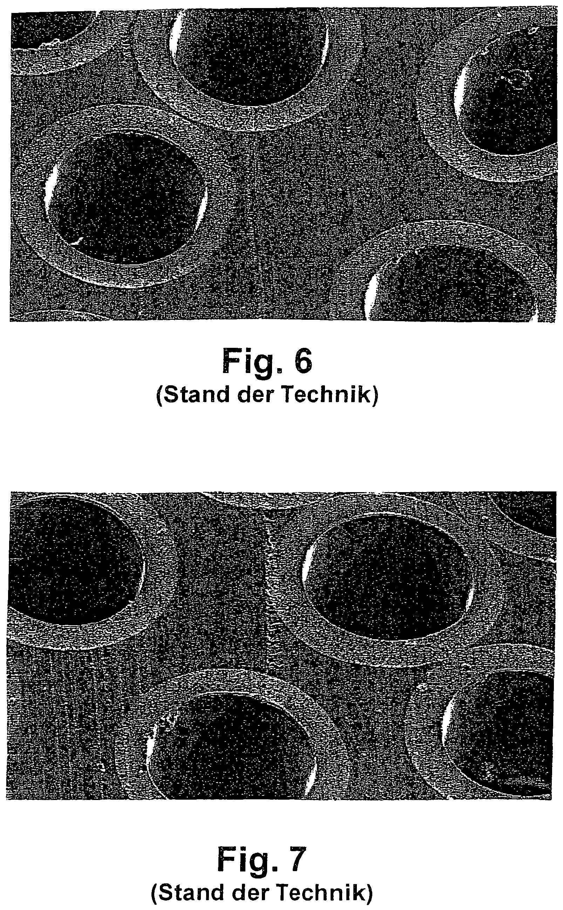

Bei neuen Messern ist die Schnittfläche (der Vergussmasse) glatt. Folge: Sie reflektiert glänzend. Aufgrund der Messerabnutzung wird die Oberfläche rau. Im Detail bekommt sie eine mehr oder weniger regelmäßig ausgeprägte sägezahnförmige Mikrostruktur (siehe auch z.B. die RE-Mikroskopaufnahme Figur 7). Da sich die Reflexion nach der Mikrooberfläche richtet wird vorzugsweise nun entgegen der Schnittrichtung schräg beleuchtet. Die Abnutzung der Messer ist partiell unterschiedlich (Kreisquerschnitt, unterschiedliche Produktdurchmesser) und somit auch die Rauhigkeit und Mikrostrukturauspräg ung.

### 3. Abbildungen:

Die Anforderungen der 2 Prüfaufgaben ("Lokalisieren und Zählen der Fasern" und "Klassifizieren der Fasern") lassen sich nicht in einem Kontrastierungsverfahren vereinigen. Deshalb werden 2 Bildaufnahmen mit unterschiedlichen Beleuchtungen gemacht. Damit die Ergebnisse der ersten Auswertung direkt als a priori Information für die zweite Prüfaufgabe verwendbar sind, wird mit einer hochauflösenden Flächenkamera gearbeitet die orthogonal zur Schnittfläche angeordnet ist.

### 3.1. Kontrastierungsverfahren zum Lokalisieren und Zählen der Fasern (UV-Schrägbeleuchtung):

- Anforderungen: Alle Fasern (offene und verschlossene) sollten möglichst kontrastreich abgebildet werden so dass sie mit Verfahren der digitalen Bildverarbeitung einfach zu erkennen sind. Erkennen meint die Separierung zur Vergussmasse (Hintergrund) sowie zu benachbarten Fasern und das Zählen der Fasern. Auch eine Positionsbestimmung ist möglich.
- Wird die Schnittfläche im sichtbaren Bereich beleuchtet so dringt das Licht tief in die Vergussmasse (PU) ein, wird an den Fasern gestreut und hellt die Fasern von unten her auf und beleuchtet die Wandungen der schrägen Fasern. Folge: Das Bild ist milchig und kontrastarm und damit für die Auswertung ungeeignet. Wird die Schnittfläche im UV-A-Bereich (z.B. 365 nm) beleuchtet, wird das Licht von den Fasern noch gut reflektiert (hell) aber in der Vergussmasse schnell absorbiert (dunkel). Dadurch wird nur noch die oberste Schicht unterhalb der Schnittfläche beleuchtet. Folge: Die Faserenden zeichnen sich scharf und kontrastreich als helle Ringe gegenüber der dunklen Vergussmasse ab.
- Störeffekt und dessen Beseitigung: Aufgrund der Fluoreszenz der Polysulfonfasern kommt es zu einer kontrastmindernden Aufhellung des Vergussbereiches. Die Fluoreszenzemission (stets energetisch niedriger und damit langwelliger als die Anregung) liegt im sichtbaren Blaugrün mit dem Maximum bei 460 nm und kann damit tief in die Vergussmasse eindringen. Erschwerend wirkt, dass die Kamera für diese Wellenlängen empfindlicher ist als für Beleuchtungswellenlänge 365 nm. Mittels eines auf die Beleuchtungswellenlänge abgestimmten UV-Bandpassfilters vor dem Kameraobjektiv wird diese störende Fluoreszenzemission herausgefiltert.
- Durch schräges beleuchten der Schnittfläche mit einem Winkel von 20 ° zur Oberfläche mittels ringförmiger Leuchte wird der Kontrast weiter verbessert. Die Faserenden werden gut beleuchtet, das Licht dringt weniger in die Vergussmasse ein und Reflexe an Schnittflächen-Unebenheiten werden vermieden.
- Mit diesem Beleuchtungsverfahren zeichnen sich die Faserenden scharf und kontrastreich als helle Ringe gegenüber der dunklen Vergussmasse ab. Offene und geschlossene Fasern können jedoch nicht unterschieden werden, da sich beider Kerne dunkel darstellen.

### 3.2. Kontrastierungsverfahren zum Klassifizieren der Fasern (UV-Auflichtbeleuchtung):

- Anforderungen: Die offenen Fasern sollen sich möglichst kontrastreich von den verschlossenen Fasern unterscheiden so dass sie mit Verfahren der digitalen Bildverarbeitung einfach klassifizierbar sind. Die Faserpositionen sind von der ersten Auswertung her bekannt, so dass es im wesentlichen auf den Kontrast zwischen offenen und verschlossenen Fasern ankommt.
- Als Grundprinzip der Kontrastierung wird die Glanzreflexion der Schnittfläche bei Beleuchtung aus Richtung der Kamera angewandt. Die Schnittflächen der Vergussmasse und der Faserwandungen reflektieren die Beleuchtung und bilden sich hell gegenüber den dunklen Kapillarhohlräumen (Löcher) ab. Ist eine Faser / Kapillare mit Vergussmasse verschlossen so reflektiert sie und erscheint hell.
- 1. Störeffekt: Aufgrund der Messerabnutzung wird die Oberfläche rau und die sägezahnförmige Mikrostruktur verändert den Reflexionswinkel. Beides führt zu einer Minderung der Glanzreflexion und damit zu einer Kontrastminderung zwischen offenen und geschlossenen Fasern.
- 2. Störeffekt: Wird die Schnittfläche im sichtbaren Bereich beleuchtet so dringt das Licht tief in die transparente Vergussmasse (PU) ein, wird an den Faserwandungen gestreut und hellt die Fasern und deren Kapillaröffnungen von unten her auf. Der Kontrast der offenen Fasern zur Vergussschnittfläche und zu den offenen Fasern reduziert sich. Beide Störeffekte führen dazu, dass die Unterscheidung zwischen Vergussmasse und Faserwandung erschwert wird.
- Beseitigung des 2. Störeffekts: Wird die Schnittfläche im UV-A-Bereich (z.B. 365 nm) beleuchtet, bleibt die Glanzreflexion an der Schnittfläche unverändert (die Glanzreflexion ist ein Grenzflächeneffekt und damit kaum von der Wellenlänge abhängig) aber in der Vergussmasse (PU) wird das Licht schnell absorbiert und es kommt nicht mehr zur Streuung und damit gegenseitigen Aufhellung der Fasern. Folge: Die Kapillaröffnungen werden stets dunkel abgebildet.

Entscheidend für beide Kontrastierungsverfahren ist die Verhinderung des Eindringens der Beleuchtungsstrahlung in die transparente Vergussmasse. Erreicht wird dies durch Wahl einer Wellenlänge bei der die Vergussmasse deutlich absorbiert, also weitgehend und lichtundurchlässig ist. Bei der ersten Auswertung wird dadurch die Aufhellung des Hintergrundes bzw. der Faserumgebung verhindert. Bei der zweiten Auswertung wird damit die Aufhellung der Kapillaröffnungen verhindert.

### 4. Komponenten der Bildaufnahmeapparatur:

- Die optischen Komponenten müssen die Abbildung mittels UV-A-Beleuchtung 365 nm noch darstellen. Das Objektiv muss noch eine ausreichende Transmission haben. Die Kamera muss noch eine ausreichende Empfindlichkeit besitzen.
- Die UV-Schrägbeleuchtung wird mit UV-LED realisiert die ringförmig um die Schnittfläche angeordnet sind, so dass der Einfallwinkel zur Schnittfläche etwa 20° beträgt.
- Die UV-Auflichtbeleuchtung wird mit UV-LED realisiert die ringförmig um das Kameraobjektiv angeordnet sind, derart dass das Reflexionsgesetz zwischen Beleuchtungsrichtung und Abbildungsstrahlengang für alle Punkte der Schnittfläche annähernd erfüllt ist.
- Das optische UV-Bandpassfilter verhindert, dass die Fluoreszenzemission der Polysulfonfasern abgebildet wird.

Kurzbeschreibung der Zeichnung, in welcher anhand von Beispielen schematisch und nicht maßstäblich zeigen:
- Figur 1: zur Erläuterung des Standes der Technik einen Rohling eines Dialysefilters, welcher aus Hohlfasern und Bindemasse besteht,
- Figur 2: zur weiteren Erläuterung des Standes der Technik ein Bündel von Hohlfasern, welches zur Prüfung durch ein erfindungsgemäßes Verfahren vorgesehen ist,
- Figur 3: eine Anordnung zum erfindungsgemäßen Erzeugen eines Diffuslichtbildes,
- Figur 4: eine Anordnung zum erfindungsgemäßen Erzeugen eines Glanzlichtbildes, und
- Figur 5: eine andere Anordnung zum erfindungsgemäßen Erzeugen eines Glanzlichtbildes,
- Figur 6: zur weiteren Veranschaulichung des Standes der Technik eine Rasterelektronen-Mikroskop-Aufname eines Ausschnitts der Stirnfläche eines Hohlfaserbündels,
- Figur 7: zur weiteren Veranschaulichung des Standes der Technik eine Rasterelektronen-Mikroskop-Aufname eines Ausschnitts der Stirnfläche eines anderen Hohlfaserbündels,
- Figur 8: ein Foto eines Diffuslichtbildes,
- Figur 9: ein Foto eines Glanzlichtbildes,
- Figur 10: ein Foto eines vergrößerten Ausschnittes eines Diffuslichtbildes,
- Figur 11: ein Foto eines vergrößerten Ausschnittes eines Glanzlichtbildes.
- Figur 12: eine Draufsicht auf eine besonders vorteilhafte Ausführungsform einer Prüflichtquelle, und
- Figur 13: eine Querschnittsdarstellung der Prüflichtquelle von Figur 12.

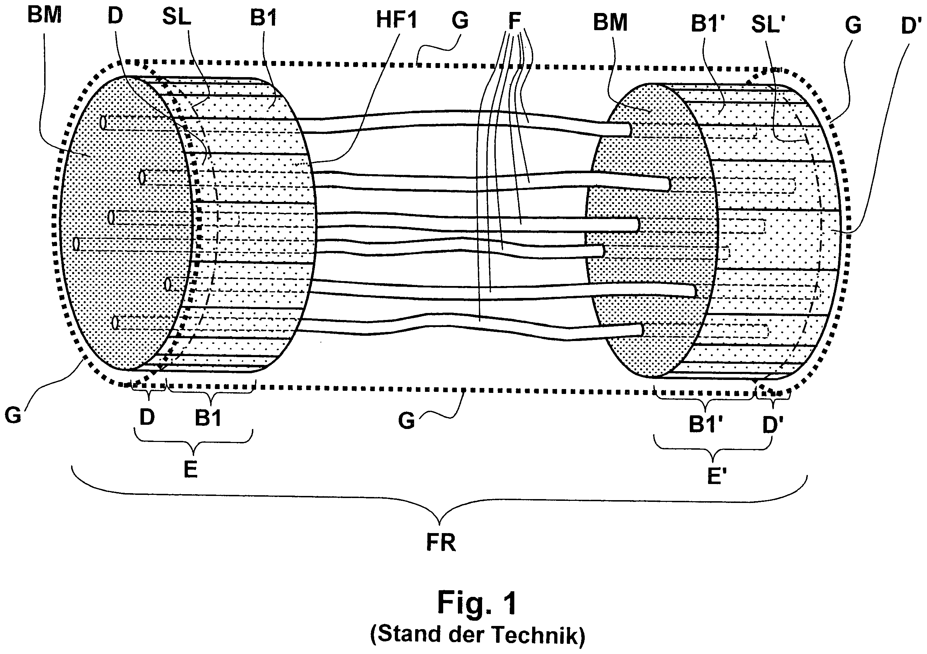

Figur 1 zeigt schematisch einen dem Stand der Technik entsprechenden Rohling FR eines Dialysefilters unmittelbar nach seiner Herstellung. Der Filterrohling FR besteht aus zahlreichen im wesentlichen parallel zueinander verlaufenden, z.B. aus Polysulfon bestehenden schlauch- oder kapillarartigen Hohlfasern F. Die Anzahl der Hohlfasern F beträgt typischerweise ca. 10.000 bis 16.000, wobei in Figur 1 aus Gründen der Anschaulichkeit aber nur sechs dieser Hohlfasern F dargestellt sind. Der Durchmesser der in den Figuren 1 bis 5 dargestellten Hohlfasern F ist aus Gründen der Anschaulichkeit übertrieben groß dargestellt. Die Figuren 1 bis 5, 12 und 13 sind nicht maßstäblich.

Die Hohlfasern F sind in jedem ihrer beiden Endbereiche von einer zwischen den Hohlfasern F befindlichen Bindemasse BM umgeben. Die Bindemasse BM bildet in jedem Endbereich der Hohlfasern F je einen zylindrischen Block E,E', in welchen die Hohlfasern F endseitig eingebettet sind. Die Bindemasse BM fixiert die Hohlfasern F in ihren Endbereichen aneinander und ist eine erstarrte Vergussmasse z.B. aus Polyurethanharz. Zwischen den beiden Blöcken E,E' verlaufen die Hohlfasern F ohne Bindemasse.

Nach dem Verguss mit Bindemasse BM sind die Enden der Hohlfasern F, oder zumindest einige davon, mit Bindemasse überdeckt und die Endbereiche vieler oder aller Hohlfasern F mit Bindemasse BM verstopft, da während des Vergusses Bindemasse in die offenen Enden der Hohlfasern F eindringt.

Daher wird der in Figur 1 links dargestellte Block E nach Erstarrung der Bindemasse BM entlang einer auf seinem Umfang bzw. seiner Mantelfläche verlaufenden kreisförmig geschlossenen Schnittlinie SL mit einem Schneidmesser aufgeschnitten. Ebenso wird der in Figur 1 rechts dargestellte Block E' nach Erstarrung der Bindemasse BM entlang einer auf seinem Umfang verlaufenden kreisförmig geschlossenen Schnittlinie SL' aufgeschnitten.

Von jedem Block E,E' wird auf diese Weise seine äußere, endseitige Deckschicht D bzw. D' abgeschnitten, wobei die Dicke der abgeschnittenen scheibenförmigen Deckschicht D,D' typischerweise einige Zentimeter beträgt, d.h. die Dicke, nicht aber der Durchmesser der Blöcke E,E' wird durch diesen Schnitt verringert.

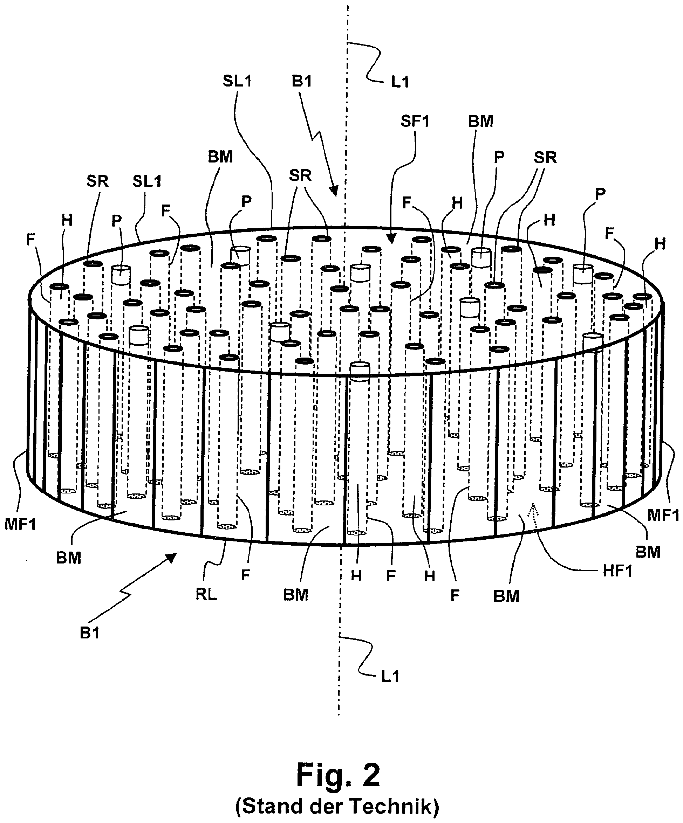

Der nach dem Schnitt verbleibende, in Figur 1 links dargestellte Bindemassenblock mit den darin eingebetteten Hohlfasern F wird im folgenden als "Bündel" B1 oder "Hohlfaserbündel" B1 bezeichnet und ist in Figur 2 separat und vergrößert dargestellt. Der nach dem Schnitt verbleibende, in Figur 1 rechts dargestellte Bindemassenblock mit den darin eingebetteten Hohlfasern-Abschnitten bildet entsprechend ein Hohlfaserbündel B1'.

Bei dem erwähnten Schnitt werden zwangsläufig auch die Enden der eingebetteten Hohlfasern F mit abgeschnitten, so dass in dem vom Schnitt betroffenen Endbereich jeder Hohlfaser F eine neue Oberfläche der betreffenden Hohlfaser F freigelegt wird. Diese neue Oberfläche ist ringförmig, üblicherweise kreisringförmig, und ihre Form entspricht dem Querschnitt der Hohlfaser F. Diese neuen Oberflächen stellen die beim Schnitt entstandenen Querschnittsenden der Hohlfasern F dar, werden im folgenden als die stirnseitigen Randflächen der Hohlfasern F bezeichnet und sind in Figur 1 nicht zu sehen, da Figur 1 den Zustand vor dem Schnitt zeigt; die genannten stirnseitigen Randflächen der Hohlfasern F sind hier also noch nicht freigelegt. In den Figuren 2 bis 5 sind diese beim Schnitt entstehenden stirnseitigen Randflächen mit dem Bezugszeichen SR gekennzeichnet.

Durch den Schnitt wird die von der Schnittlinie SL aufgespannte Oberfläche der Bindemasse BM zusammen mit den stirnseitigen Randflächen SR zur neuen endseitigen Außenfläche des in Figur 1 links dargestellten Bündels B1. Diese neue Außenfläche des Bündels B1 wird im folgenden als "Stirnfläche" bezeichnet; sie ist in Figur 1 ebenfalls nicht zu sehen, da Figur 1 den Zustand vor dem Schnitt zeigt; die Stirnfläche ist hier also ebenfalls noch nicht freigelegt. In den Figuren 2 bis 5 ist der durch den Schnitt freigelegten Stirnfläche das Bezugszeichen SF1 bzw. SF2 zugeordnet.

Die Stirnfläche besteht aus der durch den Schnitt bloßgelegten neuen stirnseitigen Außenfläche bzw. Oberfläche der Bindemasse BM und den durch den Schnitt ebenfalls bloßgelegten stirnseitigen Randflächen SR der Hohlfasern F. In die Stirnfläche münden die Innenräume H der unverstopften Hohlfasern F ein; sie ist deshalb mit zahlreichen Löchern übersät.

Ebenso wird durch den Schnitt die von der Schnittlinie SL' aufgespannte kreisförmige Fläche zur neuen endseitigen Außenfläche des in Figur 1 rechts dargestellten Bündels B1'. Diese Außenfläche wird im folgenden als "Rückfläche" bezeichnet.

Wie bereits erwähnt, dringt bei der Herstellung des Filterrohlings FR, nämlich beim Verguss, Bindemasse BM in die Endbereiche der Innenräume der Hohlfasern F ein und bildet dort nach dem Erstarren Pfropfen, welche die Hohlfasern F verstopfen. Durch den erwähnten Schnitt werden die hiervon betroffenen Endbereiche der Hohlfasern größtenteils mitsamt den Pfropfen abgeschnitten, so dass die meisten Hohlfasern nach dem Schnitt frei, d.h. unverstopft sind und mit ihren nun offenen Enden in die durch den Schnitt freigelegte Stirnfläche einmünden.

In einige der Hohlfaser-Innenräume ist jedoch Bindemasse BM beim Verguss so tief eingedrungen, dass beim Schnitt die betreffenden Pfropfen nicht vollständig entfernt, sondern durchtrennt werden, so dass die Enden dieser Hohlfasern auch nach dem Schnitt immer noch mit Restpfropfen aus Bindemasse BM verstopft sind. Verstopfte Hohlfasern beeinträchtigen aber die Wirkung des Dialysefilters.

Der Dialysefilter wird nach dem Schnitt üblicherweise in ein zylindrisches, an den Enden offenes Gehäuse G eingebracht, welches in Figur 1 punktiert und durchsichtig dargestellt ist.

Figur 2 zeigt die Situation nach dem Schnitt; das zylindrische Hohlfaserbündel B1 von Figur 1 ist in Figur 2 schematisch und gegenüber Figur 1 vergrößert dargestellt.

Die Stirnfläche SF1 ist gemeinsam gebildet durch die stirnseitigen Randflächen SR der Hohlfasern F und die stirnseitige Oberfläche der Bindemasse BM. Die stirnseitigen Randflächen SR der Hohlfasern F sind gebildet durch diejenigen Oberflächen der Hohlfasern F, welche beim Schnitt des Filterrohlings FR von Figur 1, d.h. beim Entfernen der Deckschicht D von dem Block E, mittels Schneidmesser freigelegt wurden. Die stirnseitigen Randflächen SR liegen in einer Ebene mit der stirnseitigen Oberfläche der Bindemasse BM und mit der Stirnfläche SF1.

Die stirnseitige Oberfläche der Bindemasse BM ist diejenige Oberfläche der Bindemasse BM, welche bei dem Schnitt freigelegt wurde.

Aus Gründen der Anschaulichkeit ist auch in Figur 2 nur ein kleiner Bruchteil der ca. 10.000 bis 16.000 Hohlfasern F des Bündels B1 dargestellt, wobei der Durchmesser der dargestellten Hohlfasern F auch hier übertrieben groß dargestellt ist.

Das Bündel B1 ist von der Stirnfläche SF1, einer Hinterfläche HF1 und einer zylindrisch gekrümmten Mantelfläche MF1 begrenzt. Die Hohlfasern F verlaufen im wesentlichen parallel zueinander und zur Zylinderachse L1 des Bündels B1 von der Stirnfläche SF1 des Bündels B1 durch dieses hindurch, weiter durch den bindemassenfreien Raum zwischen den Bündeln B1,B1' und durch das Bündel B1' bis zur Rückfläche des Bündels B1' (vgl. Figur 1). Die Hohlfasern F setzen sich also aus dem Bündel B1 über die Hinterfläche HF1 hinaus (in Figur 2 nach unten) fort, was in Figur 2 aber nicht gezeigt ist; dort ist nur allein das Bündel B1 mit den darin enthaltenen Teilen der Hohlfasern F dargestellt.

Sichtbares Licht und ultraviolettes Licht von 365nm Wellenlänge werden von den im vorliegenden Beispiel aus Polysulfon bestehenden Hohlfasern F stark diffus gestreut. Die Bindemasse BM besteht im vorliegenden Beispiel aus Polyurethanharz und ist für sichtbares Licht transparent bzw. trüb-transparent (also nur schwach absorbierend), für ultraviolettes Licht von 365nm Wellenlänge aber stark opak.

Die Reflexion von stirnseitig eingestrahltem UV-A-Licht an den stirnseitigen Randflächen SR der Hohlfasern F erfolgt teilweise diffus (d.h.streuend) mit einer ersten Albedo A1 und teilweise glänzend (d.h. spiegelnd), d.h. das UV-A-Licht wird bei der Reflexion aufgespalten in einen glänzend reflektierten Anteil und einen diffus reflektierten Anteil. In der Regel überwiegt der diffus reflektierte Anteil hierbei den glänzend reflektierten Anteil.

An der durch den Schnitt entstehenden stirnseitigen Oberfläche der Bindemasse BM erfolgt die Reflexion von stirnseitig eingestrahltem UV-A-Licht von z.B. 365 nm Wellenlänge ebenfalls teilweise glänzend (d.h. spiegelnd) und teilweise diffus mit einer zweiten Albedo A2, wobei die zweite Albedo A2 kleiner ist als die erste Albedo A1, d.h. es gilt A2<A1. In der Regel überwiegt hierbei umgekehrt der glänzend reflektierte Anteil den diffus reflektierten Anteil.

Wie bereits erwähnt, kann Bindemasse BM beim Verguss so tief in die Innenräume H einzelner Hohlfasen F eingedrungen sein, dass die Dicke der beim Schnitt abgetrennten Deckschicht D nicht ausreicht, die Innenräume dieser Hohlfasern freizulegen. Mit anderen Worten werden einige Pfropfen beim Schnitt nicht in voller Tiefe entfernt, sondern mit durchgeschnitten, so dass ein Rest-Pfropfen in der Hohlfaser verbleibt. Die betroffenen Hohlfasen sind also nach dem Schnitt durch Rest-Pfropfen P weiterhin verstopft. In Figur 2 sind einige verbliebene derartige Rest-Pfropfen P beispielhaft dargestellt.

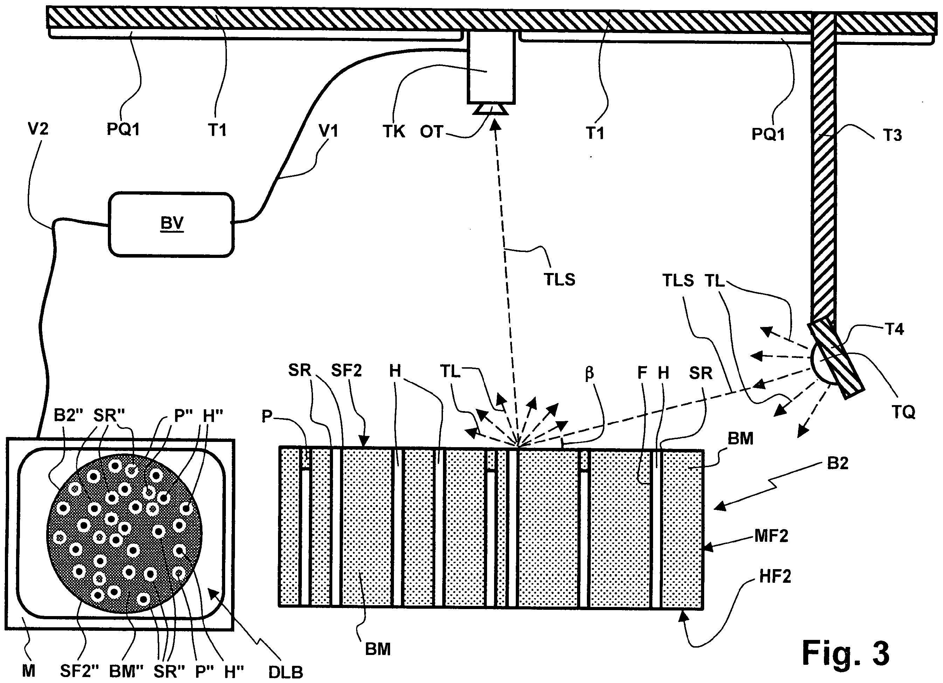

Nun wird unter Bezug auf die Figuren 3-5 eine Variante der Erfindung erläutert, welche eine Prüfung eines Hohlfaserbündels, wie z.B. des Hohlfaserbündels B1, darauf erlaubt, wie viele seiner Hohlfasern F auch nach dem Schnitt noch mit Pfropfen P aus Bindemasse BM verstopft sind.

Figur 3 zeigt eine Anordnung zum erfindungsgemäßen Erzeugen eins Diffuslichtbildes DLB, mit einem im Längsschnitt dargestellten Bündel B2, bestehend aus Hohlfasern F und Bindemasse BM, welches in der gleichen Weise durch einen Schnitt mit einem Schneidmesser aus einem Filterrohling hergestellt ist wie das Bündel B1 von Figur 2, sowie mit einer Testlichtquelle TQ, einer Testkamera TK, einem daran angeschlossenen Bildverarbeitungssystem BV und einem an diese angeschlossenen Monitor M, auf welchem das von der Testkamera TK gelieferte Diffuslichtbild DLB erscheint. Das Bündel B2 von Figur 3 gleicht dem Bündel B1 von Figur 2 in seinen prinzipiellen Eigenschaften; beide Bündel B1,B2 unterscheiden sich im wesentlichen nur durch die zufällige Anordnung der Hohlfasern und Exemplarstreuung.

In Figur 3 sind im auf dem Monitor M erscheinenden Diffuslichtbild DLB das Bild des Bündels B2 mit dem Bezugszeichen B2", die Bilder der stirnseitigen Randflächen SR mit dem Bezugszeichen SR", das Bild der Bindemasse BM mit dem Bezugszeichen BM", die Bilder von unverstopften Hohlfaser-Innenräumen mit dem Bezugszeichen H" und die Bilder von Pfropfen P mit dem Bezugszeichen P" gekennzeichnet.

Die Testlichtquelle TQ ist an einem Träger T4 angeordnet, welcher seinerseits über einen Träger T3 an einem Querträger T1 angeordnet ist. Dieser trägt zugleich auch die Testkamera TK. An dem Querträger T1 ist ferner eine Prüflichtquelle PQ1 angeordnet, welche bei der Durchführung der folgenden Verfahrensschritte a), b) und c) aber ausgeschaltet ist und zur Erzeugung des Diffuslichtbildes DLB nicht in Funktion tritt.

Das Diffuslichtbild DLB dient zum Detektieren der stirnseitigen Randflächen SR von Hohlfasern F, welche Bestandteile des Bündels B2 von Hohlfasern F sind. Das Bündel B2 kann insbesondere Teil eines ein Dialysefilters sein, ist im wesentlichen von zylindrischer Form und weist eine ebene Stirnfläche SF2, eine zylindrisch gekrümmte Mantelfläche MF2 und eine Hinterfläche HF2 auf.

Die Hohlfasern F bestehen aus einem ersten Material, nämlich im vorliegenden Beispiel aus Polysulfon, und verlaufen von der Stirnfläche SF2 zur Hinterfläche HF2 des Bündels. Auf der von der Stirnfläche SF2 abgewandten Seite der Hinterfläche HF2 setzen sich die Hohlfasern F bis zu einem weiteren Hohlfaserbündel fort (ähnlich wie die Hohlfasern des Bündels B1 von Figur 1 sich in bis zu dem Bündel B1' fortsetzen), was aber in Figur 3 nicht gezeigt ist.

Die Stirnfläche SF2 ist gemeinsam gebildet durch die stirnseitigen Randflächen SR der Hohlfasern F und die stirnseitige Oberfläche der Bindemasse BM des Bündels B2, welche durch den Schnitt bei der Herstellung des Bündels B2 freigelegt wurden.

Die Bindemasse BM besteht aus einem zweiten Material, nämlich im vorliegenden Beispiel aus Polyurethanharz oder Polyurethan, ist ebenfalls Bestandteil des Bündels B2 und befindet sich in einem an die Stirnfläche SF2 angrenzenden Bereich, nämlich demjenigen Bereich, welcher zwischen der Stirnfläche S2" und der Hinterfläche HF2 liegt, zwischen den Hohlfasern F. In diesem Bereich sind die Hohlfasern F in die Bindemasse BM eingebettet und werden von ihr gehalten.

Die meisten der Hohlfasern F weisen durchgängige, unverstopfte Innenräume H bzw. Hohlräume H auf. Einige der Hohlfasern F sind jedoch durch Pfropfen P aus Bindemasse BM, welche nach dem Schnitt als Restpfropfen P in den betroffenen Hohlfasern F verblieben sind, verstopft.

Erfindungsgemäß wird zur Erzeugung des Diffuslichtbildes DLB in einem Verfahrensschritt a) Testlicht TL einer Testwellenlänge µ mittels der Testlichtquelle TQ erzeugt und vorzugsweise unter flachem Einfallswinkel, also vorzugsweise unter geringem Elevationswinkel, auf die Stirnfläche SF2 eingestrahlt, d.h. diese wird mit Testlicht TL beleuchtet.

Als Beispiel ist in Figur 3 ein Testlichtstrahl TLS eingezeichnet, welcher von der Testlichtquelle TQ erzeugt wird, unter einem Elevationswinkel β auf die Stirnfläche SF2 trifft, dort diffus reflektiert wird und in die Testkamera TK gelangt.

Die Testwellenlänge µ liegt bevorzugt im UV-A-Bereich, besonders bevorzugt bei 365nm.

Die Hohlfasern F reflektieren das auf ihre stirnseitigen Randflächen SR auftreffende Testlicht TL mit einer ersten Albedo A1 diffus. Die Bindemasse BM bzw. deren durch den Schnitt freigelegte stirnseitige Oberfläche reflektiert auf die Stirnfläche SF2 eingestrahltes Testlicht TL der Testwellenlänge µ größtenteils glänzend (d.h. nach dem Gesetz Einfallswinkel = Ausfallswinkel), jedoch zu einem bestimmten Anteil auch diffus. Dieser Anteil wird an der stirnseitigen Oberfläche der Bindemasse mit einer zweiten Albedo A2, welche kleiner ist als die erste Albedo A1, diffus reflektiert, so dass A1>A2 gilt.

In einem Verfahrensschritt b) wird mittels der Testkamera TK, welche ein Objektiv OT aufweist und für die Testwellenlänge µ empfindlich ist, Testlicht TL nach dessen diffuser Reflexion an den stirnseitigen Randflächen SR der Hohlfasern F erfasst und auf diese Weise das Diffuslichtbild DLB der Stirnfläche SF2 erzeugt, in welchem die stirnseitigen Randflächen SR der Hohlfasern F wegen A1>A2 heller erscheinen als die Bindemasse BM.

Die Testkamera TK ist über eine Verbindung V1 an das Bildverarbeitungssystem BV angeschlossen. Dieses wiederum ist über eine Verbindung V2 an den Monitor M angeschlossen, auf welchem das von der Testkamera TK gelieferte, durch das Bildverarbeitungssystem BV nicht veränderte Diffuslichtbild DLB erscheint.

Im Diffuslichtbild DLB sind somit sämtliche stirnseitigen Randflächen SR der Hohlfasern F hell als Bilder SR" abgebildet und daher für das Bildverarbeitungssystem BV gut von der im Diffuslichtbild DLB dunkler erscheinenden Bindemasse BM unterscheidbar. Das Diffuslichtbild DLB eignet sich daher besonders gut für die automatische Detektion der stirnseitigen Randflächen SR sämtlicher Hohlfasern F, ob diese nun verstopft sind oder nicht.

In einem Verfahrensschritt c) werden die Bilder SR" der stirnseitigen Randflächen SR der Hohlfasern F anhand dieser Aufhellung der stirnseitigen Randflächen SR gegenüber der Bindemasse BM im Diffuslichtbild DLB mittels vom Bildverarbeitungssystem BV automatisch durchgeführter Bildverarbeitung detektiert und gezählt.

Die festgestellte Anzahl der Hohlfasern F im Diffuslichtbild DLB kann gespeichert werden. Anstelle der Zählung dieser Anzahl ist auch eine Feststellung z.B. der Summenfläche aller Hohlfasern, d.h. der stirnseitigen Randflächen SR möglich.

Die Orte im Diffuslichtbild DLB, an welchen Bilder SR" von stirnseitigen Randflächen SR von Hohlfasern F lokalisiert wurden, können auch gespeichert werden. Dies ist jedoch nicht zwingend erforderlich.

Zur Steigerung des Kontrastes im Diffuslichtbild DLB wird als Testwellenlänge µ bevorzugt eine solche gewählt, für welche die Albedo A1 des Hohlfasermaterials (z.B. Polysulfon) um mindestens um einen Faktor 2 größer ist als die Albedo A2 des Bindemasse-Materials (z.B. Polyurtethanharz).

Die Testwellenlänge µ wird ferner bevorzugt so gewählt, dass der Extinktionskoeffizient der Bindemasse BM für das Testlicht TL größer ist als 2/cm, um zu vermeiden, dass durch tief in die Bindemasse BM eindringendes, an den Hohlfasern F gestreutes Testlicht TL der Kontrast des Diffuslichtbildes DLB verschlechtert wird.

Diese beiden letztgenannten Bedingungen sind z.B. dann gleichzeitig erfüllt, wenn die Hohlfasern F aus Polysulfon bestehen, die Bindemasse aus Polyurethanharz besteht und die Testwellenlänge zu µ=365nm gewählt wird.

Gemäß einer Variante wird die Testlichtquelle TQ so angeordnet, dass an jedem Punkt des Diffuslichtbildes DLB maximal r % der zum Diffuslichtbild DLB beitragenden Strahlung glänzend an der Stirnseite S reflektiertes Licht ist, wobei r eine Zahl zwischen 10 und 40 ist.

Die Testlichtquelle TQ und die Testkamera TK werden vorzugsweise so angeordnet, dass kein an der stirnseitigen Oberfläche der Bindemasse BM (d.h. spiegelnd) reflektiertes, von der Testlichtquelle TQ stammendes Licht in die Testkamera TK gelangt, bzw. kein an der Stirnseite SF2 glänzend (d.h. spiegelnd) reflektiertes, von der Testlichtquelle TQ stammendes Licht in die Testkamera TK gelangt.

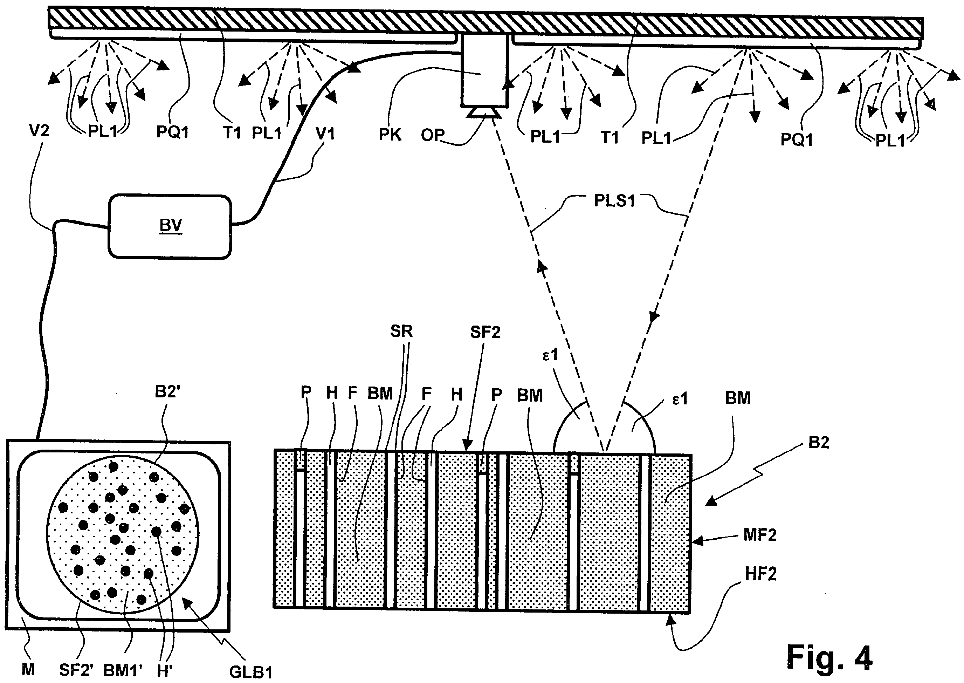

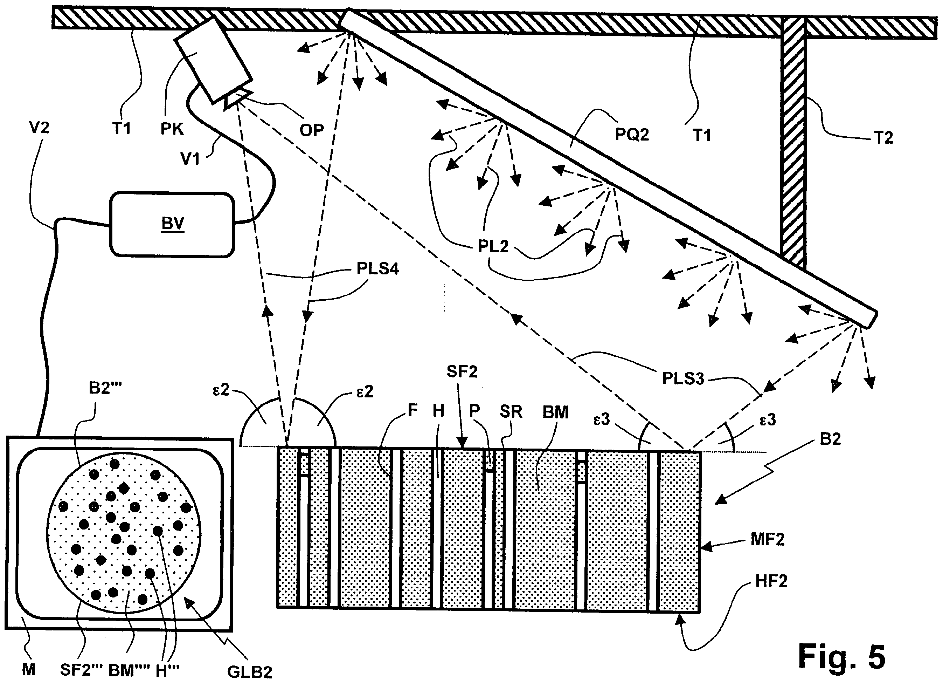

Da die stirnseitige Oberfläche der Bindemasse BM das Testlicht TL mehr glänzend als diffus reflektiert und A2<A1 gilt, erscheint die Bindemasse im Diffuslichtbild DLB Fall relativ dunkel. Dasselbe gilt für die Pfropfen P, da auch diese aus Bindemasse BM bestehen. Die Innenräume H von unverstopften Hohlfasern F erscheinen im Diffuslichtbild DLB ebenfalls dunkel, da sie das in sie einfallende Testlicht größtenteils absorbieren. Daher sind verstopfte und unverstopfte Hohlfasern F durch das Bildverarbeitungssystem BV im Diffuslichtbild DLB schlecht bzw. nicht sicher voneinander zu unterscheiden. Diese Unterscheidung wird aber in sehr sicherer Weise durch die erfindungsgemäßen Verfahrensvarianten ermöglicht, welche im folgenden unter Bezug auf die Figuren 4 und 5 erläutert werden.

Figur 4 zeigt eine Anordnung zur erfindungsgemäßen Erzeugung eines Glanzlichtbildes GLB1. Die Anordnung von Figur 4 umfasst das Bündel B2, den Querträger T1, die flächenhaft ausgedehnte, Prüflicht PL1 emittierende Prüflichtquelle PQ1, das Bildverarbeitungssystem BV, den Monitor M und die Verbindungsleitungen V1,V2 von Figur 3. Die Testkamera TK von Figur 3 ist in der Anordnung von Figur 4 durch eine Prüfkamera PK mit einem Objektiv OP ersetzt, welche für Licht einer Prüfwellenlänge λ empfindlich ist. Da die Testlichtquelle TK von Figur 3 zur Erzeugung des Glanzlichtbildes GLB1 nicht benötigt wird, sind sie und die Träger T3,T4 in der Anordnung von Figur 4 weggelassen.

Die Anordnung von Figur 4 dient zum erfindungsgemäßen Detektieren von nicht verstopften Hohlfasern F des Bündels B2 von Figur 3 mit Hilfe des Glanzlichtbildes GLB1.

In Figur 4 sind im auf dem Monitor M erscheinenden Glanzlichtbild GLB1 das Bild des Bündels B2 mit dem Bezugszeichen B2', das Bild der Bindemasse BM mit dem Bezugszeichen BM' und die Bilder von unverstopften Hohlfaser-Innenräumen mit dem Bezugszeichen H' gekennzeichnet.

Nach Ausführung der oben erläuterten Verfahrensschritte a) bis c) werden nun mit der Anordnung von Figur 4 gemäß einer besonders vorteilhaften Variante des erfindungsgemäßen Verfahrens zusätzlich folgende Verfahrensschritte d), e) und f) durchgeführt:
Verfahrensschritt d): Mittels der Prüflichtquelle PQ1 wird (bei abgeschalteter Testlichtquelle TQ) UV-A-Licht PL1 der Prüfwellenlänge λ als Prüflicht PL1 zur Beleuchtung der Stirnfläche SF2 des Bündels B2 erzeugt. Mit dem Prüflicht PL1 wird die Stirnfläche S beleuchtet. Vorzugsweise ist die leuchtende Fläche der Prüflichtquelle PQ1 größer als die Stirnfläche SF2 des Bündels B2. Die Prüflichtquelle PQ1 ist an dem Träger T1 oberhalb der Stirnfläche SF2 angeordnet. Das Prüflicht PL1 ist vorzugsweise diffus, d.h. es wird vorzugsweise völlig ungerichtet in den Halbraum unter der Prüflichtquelle PQ1 abgestrahlt, was in Figur 4 durch mehrere Gruppen von divergierenden gestrichelten Pfeilen PL1, welche von der Prüflichtquelle PQ1 ausgehen, angedeutet ist.

Die Prüfkamera PK ist oberhalb der Stirnfläche SF2 angeordnet und blickt mittels des Objektivs OP auf dieselbe.

Über das Verbindungskabel V1 ist die Prüfkamera PK an das Bildverarbeitungssystem BV angeschlossen, welches über das Verbindungskabel V2 mit dem Monitor M gekoppelt ist.

Verfahrensschritt e): Mittels der Prüfkamera PK wird Prüflicht PL1 nach dessen glänzender Reflexion an der stirnseitigen Oberfläche der Bindemasse BM erfasst.

Die stirnseitige Oberfläche der Bindemasse BM ist auf Grund der Materialeigenschaften der Bindemasse BM nach dem bei der Herstellung des Bündels B2 erfolgten Schnitt mit dem Schneidmesser so glatt, dass die Bindemasse BM auf die Stirnfläche SF2 eingestrahltes Prüflicht PL1 der Prüfwellenlänge λ zum größeren Teil glänzend (also spiegelnd, d.h. unter Einhaltung der Regel Einfallswinkel = Ausfallswinkel) und zum kleineren Teil diffus reflektiert.

Solchermaßen glänzend an der stirnseitigen Oberfläche der Bindemasse BM glänzend reflektiertes Prüflicht PL1 wird mittels der Prüfkamera PK erfasst und auf diese Weise das Glanzlichtbild GLB1 der Stirnfläche SF2 erzeugt, welches in der Anordnung von Figur 4 ohne Beeinflussung durch das Bildverarbeitungssystem BV auf dem Monitor M als Glanzlichtbild GLB1 wiedergegeben wird.

Die gegenseitige Anordnung bzw. Orientierung der Prüflichtquelle PQ1, der Prüfkamera PK sowie der Stirnfläche SF2 sind vorzugsweise so gewählt, dass in die Kamera PK gelangendes Prüflicht PL1 für jeden Ort der Stirnfläche SF2 unter einem Elevationswinkel von mindestens 60° auf die Stirnfläche SF2 einfällt; dies ist in Figur 4 am Beispiel eines Prüflichtstrahls PLS1 veranschaulicht. Der Prüflichtstrahl PLS1 trifft unter einem Elevationswinkel ε1>60° auf die Stirnfläche SF2 auf und verlässt diese nach glänzender Reflexion unter dem gleichen Elevationswinkel ε1 wieder. Der Prüflichtstrahl PLS1 gelangt nach seiner glänzenden Reflexion an der Stirnfläche SF2 in das Objektiv OP der Prüfkamera PK.

Die gegenseitige Anordnung bzw. Orientierung der Prüflichtquelle PQ1, der Prüfkamera PK sowie der Stirnfläche SF2 sind vorzugsweise ferner so gewählt, dass die gesamte stirnseitige Oberfläche der Bindemasse BM im Glanzlichtbild erfasst ist, d.h. an jedem Punkt der stirnseitigen Oberfläche der Bindemasse BM wird ein Prüflichtstrahl unter einem Elevationswinkel von mehr als 60° glänzend so reflektiert, dass er nach dieser Reflexion in die Prüfkamera PK gelangt und zum Glanzlichtbild GLB1 beiträgt. Auf Grund der Glanzreflexion von Prüflicht PL1 erscheint das Bild BM' der Bindemasse BM im Glanzlichtbild GLB1 hell.

Auch die stirnseitigen Randflächen SR der Hohlfasern F sind auf Grund des Schnittes relativ glatt; an ihnen wird Prüflicht z.T. diffus, z.T. aber auch glänzend reflektiert. Die Bilder der stirnseitigen Randflächen SR erscheinen auf dem Monitor M daher ebenfalls hell; sie heben sich vom Bild BM' der Bindemasse BM also kaum ab und sind somit in Figur 4 nicht als solche auf dem Monitor M zu erkennen. Sie können im Glanzlichtbild GLB1 vom Bildverarbeitungssystem BV schlecht bzw. nur mit großer Unsicherheit als solche detektiert werden.

Auf Grund des bei der Herstellung des Bündels B2 erfolgten Schnitts schließen die Pfropfen P der verstopften Hohlfasern F im wesentlichen bündig mit den stirnseitigen Randflächen SR der Hohlfasern F und mit der stirnseitigen Oberfläche der Bindemasse BM ab; die der Prüfkamera PK zugewandten, also stirnseitigen Oberflächen der Pfropfen P (in der Anordnung von Figur 4 sind dies ihre Oberseiten) liegen in der Ebene der Stirnfläche SF2 und sind auf Grund des Schnittes ebenfalls so glatt, dass sie eingestrahltes Prüflicht PL1 der Prüfwellenlänge λ weitaus überwiegend glänzend reflektieren. Daher wird solches Prüflicht PL, welches auf die stirnseitige Oberfläche von Pfropfen P einfällt, glänzend zur Prüfkamera PK reflektiert.

Somit findet auch an den stirnseitigen Oberflächen der Pfropfen P Glanzreflexion von Prüflicht PL1 statt. Die Pfropfen P erscheinen daher im Glanzlichtbild GLB1 und damit auch auf dem Monitor M hell. Sie heben sich somit im Glanzlichtbild GLB1 nicht oder nur wenig vom Bild BM' der übrigen Bindemasse BM und auch nur wenig von den Bildern SR' der stirnseitigen Randflächen SR ab. Sie sind somit im Glanzlichtbild GLB1 nicht oder kaum zu erkennen und daher in Figur 4 nicht als solche eingezeichnet.

Prüflicht PL, welches in die Innenräume H von unverstopften Hohlfasern F einfällt, wird hingegen nicht glänzend zur Prüfkamera PK reflektiert, sondern größtenteils absorbiert. Da von den Innenräumen H von nicht verstopften Fasern F also kein Prüflicht PL1 unter glänzender Reflexion in die Prüfkamera PK gelangt, erscheinen die Innenräume H von nicht verstopften Fasern F im Glanzlichtbild GLB1 dunkler als die stirnseitige Oberfläche der Bindemasse BM; die Bilder H' der unverstopften Innenräume H sind daher im Glanzlichtbild GLB1 und damit auch auf dem Monitor M dunkel und heben sich somit kontrastreich vom Bild BM' der Bindemasse BM ab.

Die Innenräume H von nicht verstopften Fasern F erscheinen somit im Glanzlichtbild GLB1 dunkler als die stirnseitige Oberfläche der Bindemasse BM sowie insbesondere auch dunkler als die Innenräume von solchen Hohlfasern F, welche im Bereich der Stirnfläche SF2 mit Pfropfen P aus Bindemasse BM verstopft sind.

Im Glanzlichtbild GLB1 sind somit sämtliche Innenräume H der unverstopften Hohlfasern F dunkel als Bilder H' erkennbar und daher für das Bildverarbeitungssystem BV gut von der im Glanzlichtbild GLB1 heller erscheinenden Bindemasse BM unterscheidbar. Das Glanzlichtbild eignet sich daher besonders gut für die automatische Detektion und Zählung von unverstopften Hohlfasern F.

Verfahrensschritt f): die Bilder H' der Innenräume H von nicht verstopften Hohlfasern F werden anhand dieser Abdunklung im Glanzlichtbild GLB1 automatisch mittels Bildverarbeitung detektiert und gezählt.

Die festgestellte Anzahl von Hohlfasern mit unverstopften Innenräumen kann gespeichert werden. Anstelle der Zählung dieser Anzahl ist auch eine Feststellung z.B. der Summenfläche aller nicht verstopften Fasern möglich.

Die Orte im Glanzlichtbild GLB1, an welchen Bilder H' von Innenräumen H von unverstopften Hohlfasern F lokalisiert wurden, können auch gespeichert werden.

Wenn die Bindemasse BM für das Prüflicht stark transparent ist, dringt Prüflicht in tiefere, weit von der Stirnfläche entfernten Schichten der Bindemasse BM ein und hellt dort die Innenräume der Hohlfasern F aus der Bindemasse BM heraus auf, so dass es hierdurch zu einer Aufhellung der Bilder H' der unverstopften Hohlräume H im Glanzlichtbild kommt. D.h. es tritt eine Kontrastverschlechterung ein. Um dies zu verhindern, wird als Prüfwellenlänge λ bevorzugt eine solche gewählt, für welche der Extinktionskoeffizient der Bindemasse BM größer ist als 2/cm, d.h. eine solche, welche von der Bindemasse BM stark absorbiert wird.

Diese Bedingung ist z.B. bei aus Polyurethanharz bestehender Bindemasse BM erfüllt, wenn die Prüfwellenlänge zu λ=365nm) gewählt wird.

Gemäß einer anderen, nun unter Bezug auf die Figur 5 erläuterten Variante wird ein Glanzlichtbild GLB2 erzeugt und mittels Bildverarbeitung in prinzipiell gleicher bzw. analoger Weise ausgewertet wie das Glanzlichtbild GLB1 von Figur 4.

Die Schritte d), e) und f) können vor oder nach den Schritten a), b) und c) oder zeitgleich mit diesen oder zeitlich überlappend mit diesen ausgeführt werden

Figur 5 zeigt eine alternative Anordnung zur Erzeugung eines Glanzlichtbildes, welche sich von der Anordnung von Figur 4 dadurch unterscheidet,
- dass anstelle der Prüflichtquelle PQ1 eine Prüflichtquelle PQ2 verwendet wird, welche über einen Träger T2 am Querträger T1 angeordnet ist, Prüflicht PL2 der Prüfwellenlänge λ aussendet und oberhalb der Stirnfläche SF2 angeordnet ist, und
- dass die Prüfkamera PK anders angeordnet und anders orientiert ist als in Figur 4.

An der glatten stirnseitigen Oberfläche der Bindemasse BM wird wenigstens ein Teil des von der Prüflichtquelle PQ2 emittierten Prüflichts PL2 glänzend (spiegelnd) reflektiert und mittels der Prüfkamera PK erfasst, wodurch ein Glanzlichtbild GLB2 der Stirnfläche SF2 erzeugt wird, welches ohne Beeinflussung durch das Bildverarbeitungssystem BV auf dem Monitor M als Glanzlichtbild GLB2 dargestellt wird. In Figur 5 ist das Bild des Bündels B2 mit dem Bezugszeichen B2''', das Bild der Stirnfläche SF2 mit dem Bezugszeichen SF2''', die Bilder der Innenräume H von unverstopften Hohlfasern mit dem Bezugszeichen H''' und das Bild der stirnseitigen Oberfläche der Bindemasse BM mit dem Bezugszeichen BM''' gekennzeichnet.

Die gegenseitige Anordnung bzw. Orientierung der Prüflichtquelle PQ2, der Prüfkamera PK sowie der Stirnfläche SF2 sind wiederum so gewählt, dass in die Prüfkamera PK gelangendes Prüflicht PL2 für jeden Ort der Stirnfläche SF2 unter einem Elevationswinkel von mindestens 60° auf die Stirnfläche SF2 einfällt; dies ist in Figur 2 am Beispiel zweier Prüflichtstrahlen PLS3,PLS4 veranschaulicht, welche unter einem Elevationswinkel ε2>60° bzw. ε3>60° auf die Stirnfläche S auftreffen und diese nach glänzender Reflexion unter dem gleichen Elevationswinkel ε2,ε3 wieder verlassen.

Die gegenseitige Anordnung bzw. Orientierung der Prüflichtquelle PQ2, der Prüfkamera PK sowie der Stirnfläche SF2 sind ferner so gewählt, dass die gesamte stirnseitige Oberfläche der Bindemasse BM glanzreflektiertes Prüflicht zum Glanzlichtbild GLB2 beiträgt und die gesamte stirnseitige Oberfläche der Bindemasse BM im Glanzlichtbild GLB2 erfasst ist.

Mit dieser Anordnung gemäß Figur 5 werden gemäß einer Variante des erfindungemäßen Verfahrens, welche zu der oben unter Bezug auf die Figur 4 erläuterten Variante eine Alternative darstellt, die Schritte d), e) und f) völlig sinngemäß durchgeführt.

Bevorzugt werden die Prüfwellenlänge λ und die Testwellenlänge µ identisch gewählt. Bevorzugt beträgt diese gemeinsame Wellenlänge 365nm. Ferner wird bevorzugt als Prüfkamera PK und als Testkamera TK ein- und dieselbe Kamera verwendet.

Bevorzugt wird, wenn Polysulfon als Hohlfasermaterial verwendet wird, vor die Kamera ein optisches Schmalbandfilter vorgeschaltet, welches für Licht der Wellenlänge 365nm maximale Transmission aufweist und bei einer Wellenlänge von 460nm nahezu sperrt (in den Figuren nicht gezeigt). Auf diese Weise kann Fluoreszenzlicht, welches in dem Hohlfasermaterial (Polysulfon) durch das eingestrahlte UV-A-Licht von 365nm Wellenlänge angeregt wird, weder zum Glanzlichtbild GLB1 noch zum Diffuslichtbild DLB beitragen, wodurch der Kontrast dieser Bilder GLB1 bzw. GLB2 und DLB nochmals verbessert wird.

Die Verfahrensschritte a) bis c) liefern als Ergebnis vorzugsweise die Gesamtzahl der im Diffuslichtbild DLB detektierten (verstopften und unverstopften) Hohlfasern F; die so gefundene Zahl sei hier mit G bezeichnet. Die anschließend ausgeführten Verfahrensschritte d) bis f) liefern als Ergebnis vorzugsweise die Anzahl der im Glanzlichtbild GLB1 oder GLB2 detektierten unverstopften Hohlfasern F; die so gefundene Zahl sei hier mit U bezeichnet.

Diese beiden Zahlen werden vorzugsweise miteinander verknüpft. Beispielsweise ergibt die Differenz G-U die Anzahl der verstopften Fasern, welche hier mit V bezeichnet sei. Der Quotient U/G ergibt den Anteil der unverstopften Hohlfasern an deren Gesamtzahl. Der Quotient V/G ergibt den Anteil der verstopften Hohlfasern an deren Gesamtzahl.

Die durch Verknüpfung der Zahlen G und U gewonnenen Ergebnisse können höchst vorteilhaft als quantitative Qualitätskriterien für den Verstopfungszustand und damit für die Qualität des Bündels B2 herangezogen werden.

Mittels des Bildverarbeitungssystems BV kann im Schritt c) ferner eine automatische Lokalisierung aller im Diffuslichtbild DLB detektierten Hohlfasern F vorgenommen werden, wobei die Lage aller im Diffuslichtbild DLB detektierten Hohlfasern F gespeichert werden kann. Ebenso kann im Schritt f) eine automatische Lokalisierung aller im Glanzlichtbild GLB1,GLB2 detektierten unverstopften Hohlfaser-Innenräume H vorgenommen werden, wobei die Lage im Glanzlichtbild GLB1,GLB2 ebenfalls gespeichert werden kann. Durch Vergleich der Lagen aller detektierten Hohlfasern F mit den Lagen der unverstopften Hohlfaser-Innenräume H kann eine Aussage über die Lage aller verstopften Hohlfasern gewonnen werden.

Nach erfindungsgemäßer Prüfung des Bündels B1 bzw. B2 von Hohlfasern F auf Verstopfung desselben im Bereich der Stirnfläche SF1 bzw. SF2 kann das Bündel B1 bzw. B2 selbstverständlich um 180° um eine seiner Querachsen gedreht und danach durch erneute Durchführung des erfindungsgemäßen Verfahrens eine Prüfung des Bündels B1 bzw. B2 von Hohlfasern F auf Verstopfung derselben im Bereich der Rückfläche vorgenommen werden; d.h. auch z.B. das Bündel B1' von Figur 1 kann dem erfindungsgemäßen Verfahren unterzogen werden.

Die Figuren 6 und 7 zeigen zur weiteren Veranschaulichung des Standes der Technik je eine Rasterelektronen-Mikroskop-Aufname eines Ausschnitts der Stirnfläche eines Hohlfaserbündels; die stirnseitigen Randflächen und die Innenräume der Hohlfasern sind deutlich erkennbar.

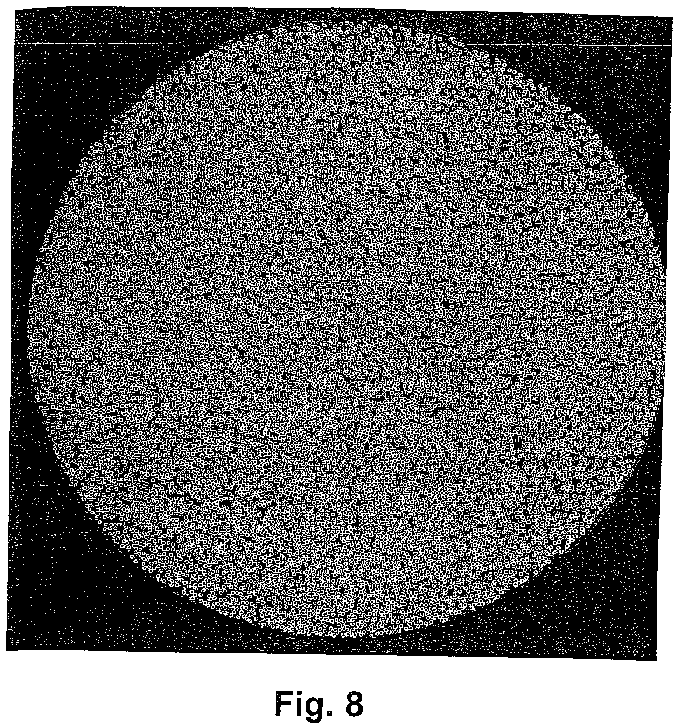

Figur 8 zeigt ein Foto eines Diffuslichtbildes eines Hohlfaserbündels. Das Foto von Figur 8 wurde unter Ausführung der oben erläuterten Verfahrensschritte a) und b) bzw. der unter Bezug auf Figur 3 erläuterten erfindungsgemäßen Vorgehensweise gewonnen. Die stirnseitigen Randflächen der Hohlfasern zeichnen sich deutlich als helle Ringe ab.

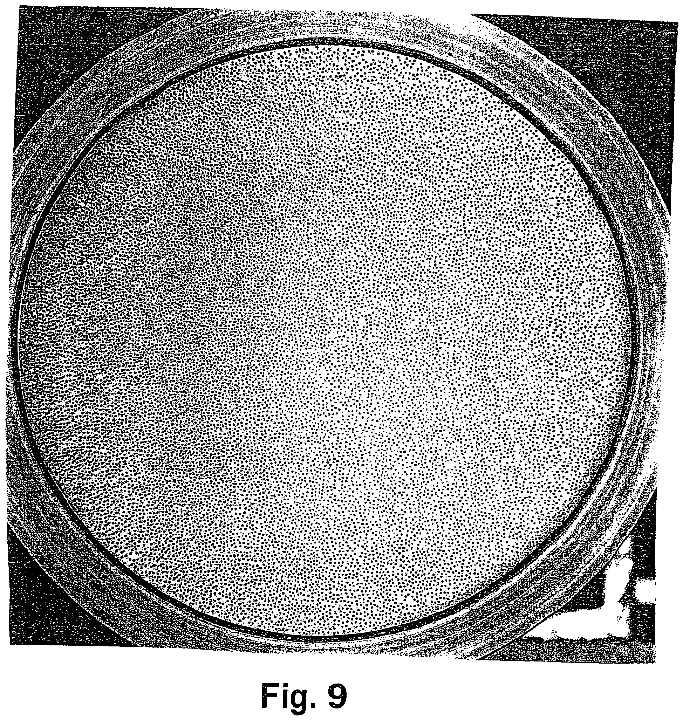

Figur 9 zeigt ein Foto eines Glanzlichtbildes eines Hohlfaserbündels. Das Foto von Figur 9 wurde unter Ausführung der oben erläuterten Verfahrensschritte d) und e) gewonnen. Die Innenräume von nicht verstopften Hohlfasern zeichnen sich deutlich als dunkle Punkte bzw. Kreise ab.

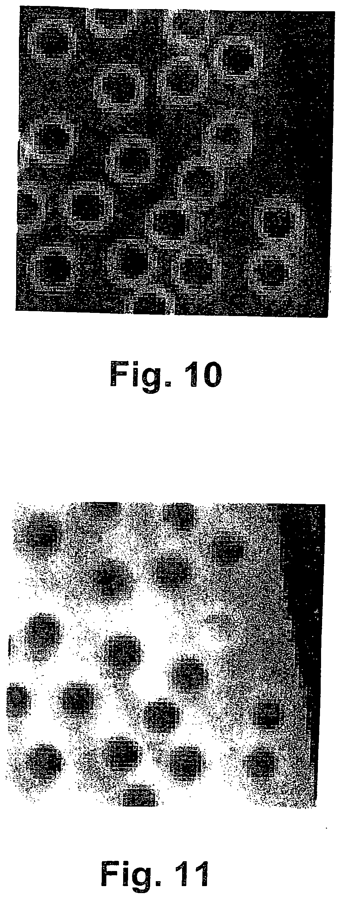

Figur 10 zeigt ein Foto eines vergrößerten Ausschnittes eines Diffuslichtbildes, welches unter Ausführung der Schritte a) und b) gewonnen wurde. Auch hier sind die stirnseitigen Randflächen von Hohlfasern sehr deutlich und kontrastreich als helle Ringe erkennbar.

Figur 11 zeigt ein Foto eines vergrößerten Ausschnittes eines Glanzlichtbildes. welches unter Ausführung der Schritte a) und b) gewonnen wurde. Die Innenräume von unverstopften Hohlfasern sind auch hier kontrastreich als dunkle, im wesentlichen kreisförmige Flächen erkennbar.

Bilder der Art, wie sie in den Figuren 8 bis 11 beispielhaft bzw. ausschnittsweise (Figuren 10 und 11) gezeigt sind, eignen sich hervorragend für eine automatische Auswertung per rechnergestützter Bildverarbeitung, insbesondere zur automatischen Zählung der stirnseitigen Randflächen bzw. der Innenräume von unverstopften Hohlfasern gemäß der Schritte c) bzw. f).

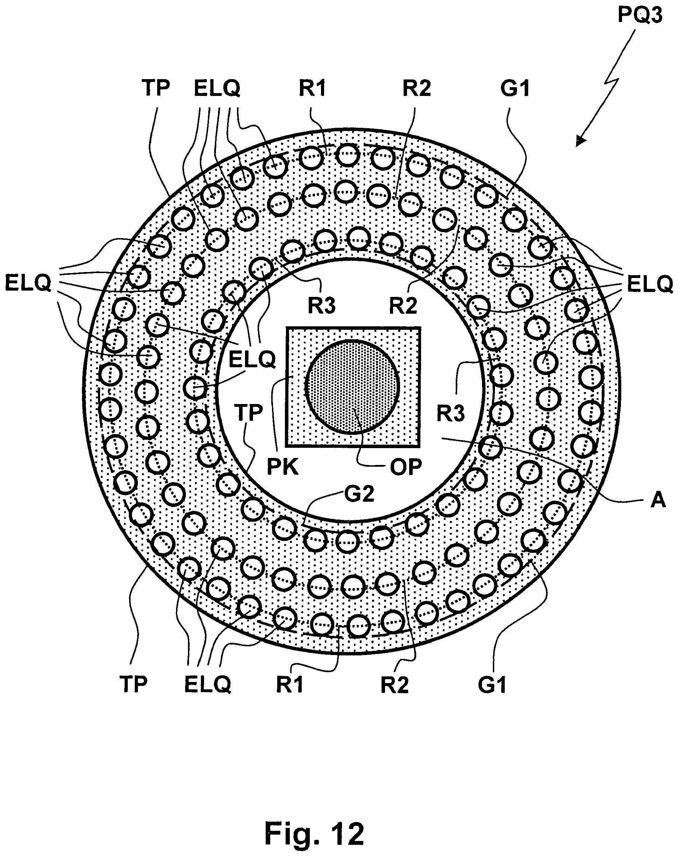

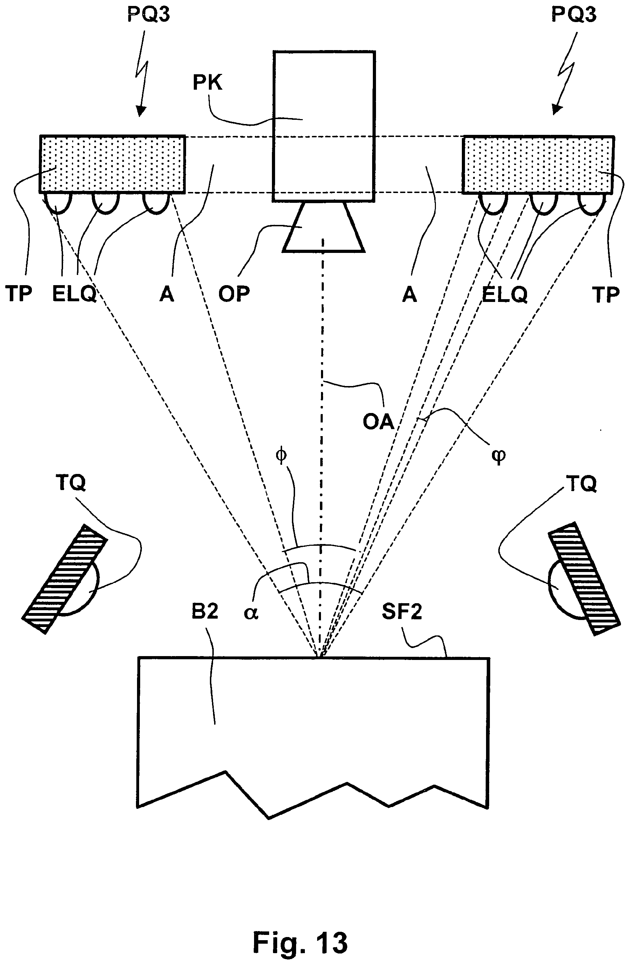

Figur 12 zeigt eine Draufsicht auf eine besonders vorteilhafte Ausführungsform einer Prüflichtquelle PQ3 zur Beleuchtung der Stirnfläche mit UV-Prüflicht zur Erzeugung eines Glanzlichtbildes. Figur 13 zeigt eine Querschnittsdarstellung der Prüflichtquelle PQ3 von Figur 12, wobei die Prüflichtquelle PQ3 in Figur 13 gegenüber der Stirnfläche SF2 des Bündels B2 der Figuren 3, 4 und 5 angeordnet ist und die Stirnfläche SF2 mit UV-Licht von 365 nm Wellenlänge beleuchtet. Fasern des Bündels B2 sind in Figur 13 nicht dargestellt.

Die Darstellung von Figur 12 zeigt die Prüflichtquelle PQ3 aus Sicht der Stirnfläche. Die Prüflichtquelle PQ3 weist eine Vielzahl von Einzellichtquellen ELQ auf, wobei jede Einzellichtquelle ELQ durch je eine UV-Leuchtdiode (UV-LED) gebildet ist, welche UV-Licht einer Wellenlänge von 365 nm auf die Stirnfläche abstrahlt.

Die UV-LEDs ELQ sind alle auf einer Trägerplatte TP angeordnet und bilden dort drei konzentrische Ringe R1, R2, R3, wobei jeder Ring R1,R2,R3 durch je einen Teil der UV-LEDs gebildet ist. Beispielsweise kann der äußere Ring R1 einen Durchmesser von 150mm aufweisen und aus 70 UV-LEDs ELQ gebildet, der mittlere Ring R2 einen Durchmesser von 120mm aufweisen und aus 50 UV-LEDs ELQ gebildet und der innere Ring R3 einen Durchmesser von 90mm aufweisen und aus 40 UV-LEDs ELQ gebildet sein.

Die Prüflichtquelle PQ3 der Figuren 12 und 13 ist somit eine solche Lichtquelle, welche eine Vielzahl von Einzellichtquellen ELQ aufweist, die in ihrer Gesamtheit eine Einhüllende aufspannen, die von jedem Punkt der Stirnfläche SF2 aus gesehen unter einem Öffnungswinkel α von wenigstens 60° erscheint. In Figur 12 ist die Einhüllende die zwischen den von den UV-LEDs ELQ aufgespannten Grenzlinien G1 und G2 befindliche Ringzone. Gemäß einer anderen Definition ist die Einhüllende nur durch die äußere Grenzlinie G1 aufgespannt und somit nicht ringförmig.

Die Prüflichtquelle wird vorzugsweise so gegenüber der Stirnfläche SF2 angeordnet (Figur 13), dass der Winkelabstand ϕ zwischen zwei beliebigen einander benachbarten Einzellichtquellen ELQ von keinem Punkt der Stirnfläche SF2 aus gesehen größer erscheint als z.B. 5°, und innerhalb der Einhüllenden existiert bis auf die Aussparung A kein nichtleuchtender Bereich, welcher von einem beliebigen Punkt der Stirnfläche (SF1,SF2) aus gesehen größer erscheint als 5°.

D.h. die Einhüllende ist dicht und ohne große Lücken mit UV-LEDs ELQ besetzt. Auf diese Weise wirkt die Prüflichtquelle PQ3 nahezu so, als würde die Einhüllende flächig und nicht punktuell Prüflicht abstrahlen; in der Praxis ergibt sich für die Prüfung des Faserbündels B2 vorteilhafterweise kein Unterschied zwischen einer flächigen Prüflichtquelle und einer gemäß Figur 12 aus UV-LEDs zusammengesetzten Prüflichtquelle PQ3.

Die Prüflichtquelle PQ3 wirkt bei der Beleuchtung der Stirnfläche SF2 vorteilhafterweise nahezu wie eine unendlich ausgedehnte, gleichmäßig (homogen) leuchtende Lichtquelle.

Die Prüflichtquelle PQ3 weist in ihrer Mitte eine nichtleuchtende, von Einzellichtquellen ELQ freie Zone oder Aussparung A auf, die von jedem Punkt der Stirnfläche SF2 aus gesehen unter einem Öffnungswinkel φ von höchstens 25° erscheint, wobei die Prüfkamera PK so angeordnet wurde, dass das Objektiv OP der Prüfkamera PK durch die freie Zone oder Aussparung A hindurch auf die Stirnfläche SF2 blickt, wobei die optische Achse OA des Objektivs OP vorzugsweise senkrecht auf de Mitte der Stirnfläche SF2 steht. Die Aussparung A kann z.B. einen Durchmesser von 90 bis 100mm aufweisen.

Die.sich kreisringförmig um die Aussparung A erstreckende Prüflichtquelle PQ3 kann einen äußeren Durchmesser von 150 bis 160mm aufweisen. Der Abstand der Einzellichtquellen ELQ zum Mittelpunkt der Stirnfläche SF2 kann z.B. 240 bis 250mm betragen.

Der Öffnungswinkel α kann z.B. ca. 36° betragen. Gemäß einer Ausführungsform der Erfindung liegt dieser Winkel zwischen 35° und 70°. Der Öffnungswinkel ϕ kann z.B. ca. 36° betragen.

Die Testlichtquellen TQ sind bei Betrieb der Prüflichtquelle PQ3 in der Regel abgeschaltet.

Die in den Figuren 12 und 13 gezeigte Ausführung der Prüflichtquelle PQ3 bringt den weiteren Vorteil mit sich, dass die Stirnfläche SF2 mit einer derartigen Prüflichtquelle PQ3 schattenfrei, frei von Lichtflecken und höchst gleichmäßig beleuchtet werden kann.

Nach Erzeugung des Glanzlichtbildes und Durchführung des Verfahrens von Anspruch 2, d.h. des Verfahrens 2, in einem ersten Durchgang kann das Bündel B2 um einen bestimmten Winkel um seine Längsachse gedreht und dann das Verfahren 2 in einem zweiten Durchgang erneut durchgeführt werden. Dieser zweite Durchgang des Verfahrens wird bei einer Beleuchtung der Stirnfläche SF2 mit der Prüflichtquelle PQ3 der Figuren 12 und 13 mit sehr hoher Wahrscheinlichkeit zum gleichen Ergebnis führen wie der erste Durchgang, d.h. das Ergebnis des Verfahrens 2 kann mit dieser Prüflichtquelle praktisch invariant gegen eine Drehung des Bündels B2 um seine Längsachse gemacht werden. Dies bedeutet, dass redundant durchgeführte Prüfungen des Bündels B2 in der Regel zu identischen Ergebnissen führen, was die Verlässlichkeit der Prüfung drastisch verbessert.

### Liste der Bezugszeichen:

- A: Aussparung in PQ3
- B1,B1',B2: Bündel von Hohlfasern
- B2',B2''': Bild von B2 im Glanzlichtbild GLB1, GLB2
- B2": Bild von B im Diffuslichtbild
- BM: Bindemasse
- BM',BM''': Bild von BM im Glanzlichtbild GLB1,GLB2
- BM": Bild von BM im Diffuslichtbild
- BV: Bildverarbeitungssystem
- D,D': Deckschichten
- DLB: Diffuslichtbild
- E,E': Blöcke
- ELQ: Einzellichtquelle, UV-LED
- F: Hohlfaser
- FR: Filterrohling
- G: Gehäuse
- GLB1,GLB2: Glanzlichtbilder
- G1,G2: erste, zweite Grenzlinie
- H: Innenraum von F
- H',H''': Bild von H im Glanzlichtbild GLB1,GLB2
- H": Bild von H im Diffuslichtbild
- HF1,HF2: Hinterfläche von B1,B2
- L1: Längsachse von B1
- M: Monitor
- MF1,MF2: Mantelfläche von B1,B2
- OA: optische Achse
- OP: Objektiv von PK
- OT: Objektiv von TK
- P: Pfropfen
- P": Bild von P im Diffuslichtbild
- PL1,PL2: UV-Prüflicht
- PLS1,PLS3,PSL4: UV-Prüflichtstrahlen
- PK: Prüfkamera
- PQ1,PQ2,PQ3: Prüflichtquellen
- R: Rückfläche
- R1,R2,R3: erster, zweiter, dritter Ring
- SF1,SF2: Stirnfläche von B1,B2
- SF2',SF2''': Bild von SF2 im Glanzlichtbild GLB1,GLB2
- SF2": Bild von SF" im Diffuslichtbild
- SR: stirnseitige Randfläche von F
- SR": Bild von SR im Diffuslichtbild
- SL,SL': Schnittlinien
- TK: Testkamera
- TL: UV-Testlicht
- TLS: Testlichtstrahl
- TQ: Testlichtquelle
- TP: Trägerplatte
- T1: Querträger
- T2,T3,T4: Träger
- V1,V2: Verbindungskabel
- α, φ, ϕ: Öffnungswinkel
- β: Elevationswinkel von Testlicht
- ε1,ε2,ε3: Elevationswinkel von Prüflicht
- Ω: Schnittwinkel

## Patentansprüche

1. Verfahren zum Detektieren der Innenräume (H) von nicht verstopften Hohlfasern (F), welche Bestandteile eines Bündels (B1,B2) von Hohlfasern (F) sind, wobei
- das Bündel (B1,B2) eine Stirnfläche (SF1,SF2) und eine Hinterfläche (HF1,HF2) aufweist,
- die Hohlfasern (F) aus einem ersten Material, insbesondere Kunststoff wie z.B. Polysulfon oder sonstiger Polymer, bestehen und von der Stirnfläche (SF1,SF2) bis mindestens zur Hinterfläche (HF1,HF2) des Bündels (B1,B2) verlaufen,
- die Stirnfläche (SF1,SF2) gemeinsam gebildet ist durch die stirnseitigen Randflächen (SR) der Hohlfasern (F) und die stirnseitige Oberfläche einer Bindemasse (BM), welche
- ebenfalls Bestandteil des Bündels (B1,B2) ist und aus einem zweiten Material, insbesondere Kunststoff wie z.B. Polyurethanharz oder Polyurethan, besteht,
- sich im Bereich zwischen der Stirnfläche (SF1,SF2) und der Hinterfläche (HF1,HF2) zwischen den Hohlfasern (F) befindet
- und in welche die Hohlfasern (F) wenigstens in diesem Bereich eingebettet sind,
- und die stirnseitige Oberfläche der Bindemasse (BM) so glatt ist, dass die Bindemasse (BM) auf die Stirnfläche (SF1,SF2) eingestrahltes Prüflicht zumindest teilweise glänzend und höchstens teilweise diffus reflektiert, **gekennzeichnet durch** folgende Schritte:
d) mittels einer Prüflichtquelle (PQ1,PQ2), welche aus einer einzigen oder einer Mehrzahl von Einzel-Prüflichtquellen besteht, die ihr Licht ungerichtet in einen Halbraum unter der Prüflichtquelle (PQ1) abstrahlen, und wobei als Prüflichtquelle (PQ1,PQ2) eine flächig ausgedehnte Lichtquelle (PQ1,PQ2) verwendet wird, welche von jedem Punkt der Stirnfläche (SF1,SF2) aus gesehen in ihrer Gesamtheit eine Einhüllende aufspannen, die unter einem Öffnungswinkel (alpha) von wenigstens 60° oder wenigstens 35° oder wenigstens 30° erscheint und Prüflicht (PL1,PL2,PL3) erzeugt, wird die Stirnfläche (SF1,SF2) beleuchtet,
e) mittels einer Prüfkamera (PK) wird Prüflicht (PL1,PL2,PL3) nach dessen glänzender Reflexion an der stirnseitigen Oberfläche der Bindemasse (BM) erfasst und auf diese Weise mittels der Prüfkamera (PK) ein Glanzlichtbild (GLB1,GLB2) der Stirnfläche (SF1,SF2) erzeugt, in welchem die Innenräume (H) von nicht verstopften Fasern (F) dunkler erscheinen als die stirnseitige Oberfläche der Bindemasse (BM) sowie insbesondere auch dunkler als die Innenräume von solchen Hohlfasern (F), welche im Bereich der Stirnfläche (SF1,SF2) mit Bindemasse (BM) verstopft sind,
f) die Bilder (H') der Innenräume (H) von nicht verstopften Hohlfasern (F) werden anhand dieser Abdunklung im Glanzlichtbild (GLB1,GLB2) automatisch mittels Bildverarbeitung detektiert oder detektiert und gezählt.

2. Verfahren nach Anspruch 1, **dadurch gekennzeichnet, dass** zum Detektieren der stirnseitigen Randflächen (SR) von Hohlfasern (F), die Hohlfasern (F) an ihren stirnseitigen Randflächen (SR) Testlicht (TL), welches auf die Stirnfläche (SF1,SF2) eingestrahlt wird, mit einer ersten Albedo A1 diffus reflektieren, und die Bindemasse (BM) auf die Stirnfläche (SF1,SF2) eingestrahltes Testlicht (TL) mit einer zweiten Albedo A2, welche kleiner ist als die erste Albedo A1, diffus reflektiert, so dass A1 >A2 gilt, wobei - entweder nach dem Verfahren von Anspruch 1,
- oder vor dem Verfahren von Anspruch 1,
- oder gleichzeitig mit dem Verfahren von Anspruch 1
- oder zeitlich überlappend mit dem Verfahren von Anspruch 1, folgende Schritte durchgeführt werden:
a) mittels einer Testlichtquelle (TQ), welche aus einer einzigen oder einer Mehrzahl von Einzel-Prüflichtquellen besteht und Testlicht (TL) erzeugt, wird die Stirnfläche (SF1,SF2) beleuchtet,
b) mittels einer Testkamera (TK) wird Testlicht (TL) nach dessen diffuser Reflexion an der Stirnfläche (SF1,SF2) erfasst und auf diese Weise ein Diffuslichtbild (DLB) der Stirnfläche (SF1,SF2) erzeugt, in welchem die stirnseitigen Randflächen (SR) der Hohlfasern (F) wegen A1>A2 heller erscheinen als die Bindemasse (BM),
c) die Bilder (SR") der stirnseitigen Randflächen (SR) der Hohlfasern (F) werden anhand dieser Aufhellung im Diffuslichtbild (DLB) automatisch mittels Bildverarbeitung detektiert oder detektiert und gezählt werden.

3. Verfahren nach den Anspruch 2, **dadurch gekennzeichnet, dass** das Bündel (B1,B2) von Hohlfasern (F) sowohl dem Verfahren von Anspruch 1 als auch dem Verfahren von Anspruch 2 unterzogen wird, und die Ergebnisse der Verfahren von Anspruch 1 und Anspruch 2 miteinander verglichen oder verknüpft werden.

4. Verfahren nach den Ansprüchen 1 bis 3, **dadurch gekennzeichnet, dass**
- die Zahl der mit Bindemasse (BM) verstopften Hohlfasern (F) bestimmt wird, indem die im Glanzlichtbild (GLB1,GLB2) ermittelte Zahl von nicht verstopften Hohlfasern (F) von der im Diffuslichtbild (DLB) ermittelten Zahl von Hohlfasern (F) subtrahiert wird, oder
- der relative Anteil der nicht mit Bindemasse (BM) verstopften Hohlfasern (F) an der Gesamtzahl der Hohlfasern (F) bestimmt wird, indem die im Glanzlichtbild (GLB1,GLB2) ermittelte Zahl von nicht verstopften Hohlfasern (F) durch die im Diffuslichtbild (DLB) ermittelte Zahl von Hohlfasern (F) dividiert wird, oder
- der relative Anteil der mit Bindemasse (BM) verstopften Hohlfasern (F) an der Gesamtzahl der Hohlfasern (F) bestimmt wird, indem die Differenz zwischen der im Diffuslichtbild (DLB) ermittelten Zahl von Hohlfasern (F) und der im Glanzlichtbild (GLB1,GLB2) ermittelten Zahl
von nicht verstopften Hohlfasern (F) durch die im Diffuslichtbild (DLB) ermittelte Zahl von Hohlfasern (F) dividiert wird.

5. Verfahren nach einem der Ansprüche 1 oder 2 oder nach Anspruch 1 und 2, **dadurch gekennzeichnet, dass**
- das Testlicht Licht einer Testwellenlänge µ ist, und/oder
- das Prüflicht Licht einer Prüfwellenlänge λ ist.

6. Verfahren nach Anspruch 5 , **dadurch gekennzeichnet, dass** die Testwellenlänge µ von der Prüfwellenlänge λ verschieden ist und/oder das Testlicht (TL) und das Prüflicht (PL1,PL2) unterschiedlich polarisiert sind.

7. Verfahren nach einem der vorigen Ansprüche, **dadurch gekennzeichnet,**
**dass**
- das Prüflicht (PL1,PL2) unter einem Elevationswinkel (ε1,ε2,ε3) von mindestens 60° oder mindestens 75° auf die Stirnfläche (SF1,SF2) eingestrahlt wird, und/oder
- das Testlicht (TL) unter einem Elevationswinkel (β) von höchstens 60° oder von höchstens 45° oder von höchstens 30° oder von höchstens 20° auf die Stirnfläche (S) eingestrahlt wird.

8. Verfahren nach Anspruch 5 oder 6, **dadurch gekennzeichnet, dass**
- das zweite Material und die Prüfwellenlänge λ so gewählt werden, dass der Extinktionskoeffizient der Bindemasse (BM) bei der Prüfwellenlänge λ grösser ist als 0,1/cm oder grösser ist als 1/cm oder grösser ist als 10/cm, und/oder
- das zweite Material und die Testwellenlänge µ so gewählt werden,
dass der Extinktionskoeffizient der Bindemasse (BM) bei der Testwellenlänge µ grösser ist als 0,1/cm oder grösser ist als 1/cm oder grösser ist als 10/cm.

9. Verfahren nach einem der Ansprüche 5, 6 oder 8, **dadurch gekennzeichnet, dass** das erste Material, das zweite Material und die Testwellenlänge µ so gewählt werden, dass die erste Albedo A1 bei der Testwellenlänge µ um mindestens einen Faktor 1.1 oder einen Faktor 1.5 oder einen Faktor 2 grösser ist als die zweite Albedo A2.

10. Verfahren nach einem der Ansprüche 5, 6, 8 oder 9, **dadurch gekennzeichnet, dass** die Prüfwellenlänge λ und die Testwellenlänge µ identisch gewählt werden oder so gewählt werden, dass sie sich um weniger als 10% oder um weniger als 1 % unterscheiden.

11. Verfahren nach einem der Ansprüche 5, 6, 8, 9 oder 10, **dadurch gekennzeichnet,**
**dass** die Prüfwellenlänge A zwischen 360nm und 380nm liegt und/oder die Testwellenlänge µ zwischen 360nm und 380nm liegt.

12. Verfahren nach einem der vorigen Ansprüche, **dadurch gekennzeichnet, dass** die Prüfkamera (PK) und die Testkamera (TK) identisch sind.

13. Verfahren nach einem der Ansprüche 5, 6, 8, 9, 10 oder 11, **dadurch gekennzeichnet, dass**
- ein optisches Bandpassfilter, insbesondere Schmalbandfilter, oder ein anderes wellenlängenselektives optisches Filter verwendet wird, welches für Licht der Testwellenlänge µ durchlässig und zwischen dem Bündel (B1,B2) und der Testkamera (TK) in den Lichtweg des Testlichts (TL) eingebracht ist, und/oder
- ein optisches Bandpassfilter, insbesondere Schmalbandfilter, oder ein anderes wellenlängenselektives optisches Filter verwendet wird, welches für Licht der Prüfwellenlänge λ durchlässig ist und zwischen dem Bündel (B1,B2) und der Prüfkamera (PK) in den Lichtweg des Prüflichts (PL1,PL2) eingebracht ist.

14. Verfahren nach einem der vorigen Ansprüche, **dadurch gekennzeichnet, dass**
- zwischen dem Bündel (B1,B2) und der Testkamera (TK) in den Lichtweg des Testlichts (TL) ein solches optisches Filter eingebracht ist, welches bei einer zwischen 350nm und 380nm liegenden Wellenlänge maximale Transmission aufweist und bei einer Wellenlänge von 460nm sperrt oder eine Transmission aufweist, welche höchstens 50% oder höchstens 10% der maximalen Transmission beträgt.
- und/oder zwischen dem Bündel (B1,B2) und der Prüfkamera (PK) in den Lichtweg des Prüflichts (PL1,PL2) ein solches optisches Filter eingebracht ist, welches bei einer zwischen 350nm und 380nm liegenden Wellenlänge maximale Transmission aufweist und bei einer Wellenlänge von 460nm sperrt oder eine Transmission aufweist, welche höchstens 50% oder höchstens 10% der maximalen Transmission beträgt.

15. Verfahren nach einem der vorigen Ansprüche, **dadurch gekennzeichnet, dass**
- das die Hohlfasern (F) aus Polysulfon oder überwiegend aus Polysulfon oder aus einem Polymer oder überwiegend aus einem Polymer bestehen oder aus einem ersten Kunststoff bestehen, und/oder
- die Bindemasse (BM) aus Polyurethan oder überwiegend aus Polyurethan oder aus Polyurethanharz oder überwiegend aus Polyurethanharz oder aus einem zweiten Kunststoff besteht.

16. Verfahren nach einem der vorigen Ansprüche, **dadurch gekennzeichnet, dass**
- nach Durchführung des Detektierens der stirnseitigen Randflächen das Bündel (B1,B2) um einen bestimmten Winkel um seine Längsachse (L1) gedreht und dann das Detektieren der stirnseitigen Randflächen erneut durchgeführt wird, und/oder
- nach Durchführung des Detektierens der Innenräume das Bündel (B1,B2) um einen bestimmten Winkel um seine Längsachse (L1) gedreht und dann das Detektieren der Innenräume erneut durchgeführt wird.

17. Verfahren nach einem der vorigen Ansprüche, **dadurch gekennzeichnet, dass** die Testkamera (TK) so angeordnet ist, dass kein an der stirnseitigen Oberfläche der Bindemasse (BM) glänzend reflektiertes Testlicht (TL) in die Testkamera (TK) gelangt.

18. Verfahren nach einem der Ansprüche 5, 6, 8, 9, 10, 11 oder 13, **dadurch gekennzeichnet, dass**
- die Testwellenlänge µ von der Prüfwellenlänge A verschieden ist,
- im Lichtweg des Testlichts (TL) ein wellenlängenselektives optisches Filter, insbesondere Bandpass- oder Schmalbandfilter, eingebracht ist, welches Licht der Testwellenlänge µ zu mindestens einem Prozentsatz x1 transmittiert und Licht der Prüfwellenlänge λ zu höchstens einem Prozentsatz x2 transmittiert, wobei x2 < 0,5 * x1 ist, und
- im Lichtweg des Prüflichts (TL) ein wellenlängenselektives optisches Filter, insbesondere Bandpass- oder Schmalbandfilter, eingebracht ist, welches Licht der Prüfwellenlänge λ zu mindestens einem Prozentsatz y1 transmittiert und Licht der Testwellenlänge µ zu höchstens einem Prozentsatz y2 transmittiert, wobei y2 < 0,5 * y1 ist, und der Schritt a) zeitgleich oder zeitlich überlappend mit dem Schritt d) und/oder der Schritt b) zeitgleich oder zeitlich überlappend mit dem Schritt e) ausgeführt wird.

19. Verfahren nach einem der Ansprüche 1 bis 18, **dadurch gekennzeichnet, dass** als Prüflichtquelle (PQ3) eine solche Lichtquelle (PQ3) verwendet wird, welche eine Mehrzahl oder Vielzahl von Einzellichtquellen (ELQ) aufweist, wobei jede Einzellichtquelle durch je eine Leuchtdiode gebildet ist.

20. Verfahren nach Anspruch 19, **dadurch gekennzeichnet, dass** innerhalb der Einhüllenden bis auf eine mögliche zentrale Aussparung (A) kein nichtleuchtender Bereich existiert, welcher von einem beliebigen Punkt der Stirnfläche (SF1,SF2) aus gesehen unter einem Öffnungswinkel (ϕ) erscheint, welcher grösser ist als 10° oder grösser als 5° oder grösser als 3°.

21. Verfahren nach einem der Ansprüche 1 bis 20, **dadurch gekennzeichnet, dass** als Prüflichtquelle (PQ1,PQ3) eine Lichtquelle (PQ1,PQ3) mit einer Aussparung (A) oder einem Durchbruch (A) verwendet wird, um welche bzw. um welchen sich die Prüflichtquelle (PQ1,PQ3) ringförmig oder kreisringförmig erstreckt .

22. Verfahren nach Anspruch 21, **dadurch gekennzeichnet, dass** die Prüfkamera (PK) so angeordnet wird, dass sie durch den Durchbruch (A) oder die Aussparung (A) hindurch auf die Stirnfläche (SF2) blickt.

## Claims

1. Method for detecting the interior volumes (H) of nonblocked hollow fibers (F) that are constituents of a bundle (B1, B2) of hollow fibers (F), wherein
- the bundle (B1, B2) comprises a front surface (SF1, SF2) and a rear surface (HF1, HF2),
- the hollow fibers (F) are comprised of a first material, in particular a synthetic material, such as for example polysulfone or another polymer, and extend from the front surface (SF1, SF2) to at least the rear surface (HF1, HF2) of the bundle (B1, B2),
- the front surface (SF1, SF2) is jointly formed by the front-face edge faces (SR) of the hollow fibers (F) and the front-face surface of a binding substance (BM), which
- is also a constituent of the bundle (B1, B2) and is comprised of a second material, in particular a synthetic material such as, for example, polyurethane resin or polyurethane,
- is located in the region between the front surface (SF1, SF2) and the rear surface (HF1, HF2) between the hollow fibers (F)
- and in which the hollow fibers (F) are at least in this region embedded,
- and the front-face surface of the binding substance (BM) is of such glossiness that the binding substance (BM) reflects check light irradiated onto the front surface (SF1, SF2) at least partially specularly and at most partially diffusely,
**characterized by** the following steps:
d) the front surface (SF1, SF2) is illuminated by means of a check light (PQ1, PQ2), comprised of a single check light source or a plurality of single check light sources, which radiates or radiate its/their light omnidirectionally into a half-space below the check light source (PQ1), and wherein as the check light source (PQ1, PQ2) a planarly extended light source (PQ1, PQ2) is employed which, viewed from each
point of the front surface (SF1, SF2), span in their totality an envelope that appears amidst an aperture angle (alpha) of at least 60° or at least 35° or at least 30° and generates check light (PL1, PL2, PL3),
e) by means of a check camera (PK), check light (PL1, PL2, PL3) is recorded after it has been specularly reflected at the front-face surface of the binding substance (BM) and in this manner, by means of the check camera (PK), a specular light image (GLB1, GLB2) of the front surface (SF1, SF2) is generated in which the interior volumes (H) of nonblocked fibers (F) appear darker than the front-face surface of the binding substance (BM) as well as in particular also darker than the interior volumes of such hollow fibers (F) that in the proximity of the front surface (SF1, SF2) are blocked by binding substance (BM),
f) the images (H') of the interior volumes (H) of nonblocked hollow fibers (F) are automatically detected based on this darkening in the specular light image (GLB1, GLB2), by means of image processing or they are detected and counted.

2. Heat Method as in claim 1, **characterized in that** for the detection of the front-face edge faces (SR) of hollow fibers (F), the hollow fibers (F) diffusely reflect at their front-face edge faces (SR) test light (TL), which is irradiated onto the front surface (SF1, SF2), at a first albedo A1 and the binding substance (BM) diffusely reflects test light (TL) irradiated onto the front surface (SF1, SF2) at a second albedo A2 which is less than the first albedo A1 such that A1 > A2 applies, wherein
- either after the method of claim 1,
- or before the method of claim 1,
- or simultaneously with the method of claim 1,
- or overlapping in time with the method of claim 1,
the following steps are carried out:
a) by means of a test light source (TQ), which is comprised of a single test light source or of a plurality of single check [sic: test] light sources and generates test light (TL), the front surface (SF1, SF2) is illuminated,
b) by means of a test camera (TK), test light (TL), after its diffuse reflection at the front surface (SF1, SF2), is recorded and in this manner a diffuse light image (DLB) of the front surface (SF1, SF2) is generated in which the front-face edge faces (SR) of the hollow fibers (F) appear brighter than the binding substance (BM) since A1 > A2,
c) the images (SR") of the front-face edge faces (SR) of the hollow fibers (F) are automatically detected based on this brightening in the diffuse light image (DLB) by means of image processing or they are detected and counted.

3. Method as in claim 2, **characterized in that** the bundle (B1, B2) of hollow fibers (F) is subjected to the method of claim 1 as well as also to the method of claim 2, and the results of the methods of claim 1 and claim 2 are compared or linked with one another.

4. Method as in claims 1 to 3, **characterized in that**
- the number of the hollow fibers (F) blocked by binding substance (BM) is determined thereby that the number of nonblocked hollow fibers (F) determined in the specular light image (GLB1, GLB2) is subtracted from the number of hollow fibers (F) determined in the diffuse light image (DLB), or
- the relative fraction of the hollow fibers (F) not blocked by binding substance (BM) in the total number of hollow fibers (F) is ascertained thereby that the number of nonblocked hollow fibers (F) determined in the specular light image (GLB1, GLB2) is divided by the number of hollow fibers (F) determined in the diffuse light image (DLB) or
- the relative fraction of hollow fibers (F) blocked by binding substance (BM) in the total number of the hollow fibers (F) is ascertained thereby that the difference between the number of hollow fibers (F) determined in the diffuse light image (DLB) and the number of nonblocked hollow fibers (F) determined in the specular light image (GLB1, GLB2) is divided by the number of hollow fibers (F) determined in the diffuse light image (DLB).

5. Method as in one of claims 1 or 2 or as in claim 1 and 2, **characterized in that**
- the test light is light of a test wavelength µ and/or
- the check light is light of a check wavelength λ.

6. Method as in claim 5, **characterized in that** the test wavelength µ differs from the check wavelength λ, and/or the test light (TL) and the check light (PL1, PL2) are differently polarized.

7. Method as in one of the preceding claims, **characterized in that**
- the check light (PL1, PL2) is irradiated onto the front surface (SF1, SF2) at an elevation angle (ε1, ε2, ε3) of at least 60° or at least 75° and/or
- the test light (TL) is irradiated onto the front face (S) [sic: (not in drawing) (SF1, SF2)] at an elevation angle (β) of maximally 60° or maximally 45° or maximally 30° or maximally 20°.

8. Method as in claim 5 or 6, **characterized in that**
- the second material and the check wavelength A are selected such that the extinction coefficient of the binding substance (BM) at the check wavelength λ is greater than 0.1/cm or greater than 1/cm or greater than 10/cm and/or
- the second material and the test wavelength µ are selected such that the extinction coefficient of the binding substance (BM) at the test wavelength µ is greater than 0.1/cm or greater than 1/cm or greater than 10/cm.

9. Method as in one of claims 5, 6 or 8, **characterized in that** the first material, the second material and the test wavelength µ are selected such that the first albedo A1 at the test wavelength µ is at least greater than the second albedo A2 by at least a factor 1.1 or a factor 1.5 or a factor 2.

10. Method as in one of claims 5, 6, 8 or 9, **characterized in that** the check wavelength λ and the test wavelength µ are selected such that they are identical or are selected such that they differ by less than 10% or by less than 1%.

11. Method as in one of claims 5, 6, 8, 9 or 10, **characterized in that** the check wavelength A is between 360 nm and 380 nm and/or the test wavelength µ is between 360 nm and 380 nm.).

12. Method as in one of the preceding claims, **characterized in that** the check camera (PK) and the test camera (TK) are identical.

13. Method as in one of claims 5, 6, 8, 9, 10 or 11, **characterized in that**
- an optical bandpass filter, in particular a narrow band filter or another wavelength-selective optical filter, is utilized that is transmissive for light of the test wavelength µ and is introduced into the optical path of the test light (TL) between the bundle (B1, B2) and the test camera (TK) and/or
- an optical bandpass filter, in particular a narrow band filter or another wavelength-selective optical filter, is utilized that is transmissive for light of the check wavelength A and is introduced into the optical path of the check light (PL1, PL2) between the bundle (B1, B2) and the check camera (PK).

14. Method as in one of the preceding claims, **characterized in that**
- between the bundle (B1, B2) and the test camera (TK) into the optical path of the test light (TL) such an optical filter is introduced that has maximum transmission at a wavelength between 350 nm and 380 nm and cuts off at a wavelength of 460 nm or has a transmission which is maximally 50% or maximally 10% of the maximum transmission,
- and/or between the bundle (B1, B2) and the check camera (PK) into the optical path of the check light (PL1, PL2) such an optical filter is introduced that has maximum transmission at a wavelength between 350 nm and 380 nm and cuts off at a wavelength of 460 nm or has a transmission which is maximally 50% or maximally 10% of the maximum transmission.

15. Method as in one of the preceding claims, **characterized in that**
- the hollow fibers (F) are comprised of polysulfone or largely of polysulfone or of a polymer or largely of a polymer or of a first synthetic material and/or
- the binding substance (BM) is comprised of polyurethane or largely of polyurethane or of polyurethane resin or largely of polyurethane resin or of a second synthetic material.

16. Method as in one of the preceding claims, **characterized in that**
- after carrying out the detection of the front-face edge faces, the bundle (B1, B2) is rotated about a specific angle about its longitudinal axis (L1) and subsequently the detection of the front-face edge faces is again carried out, and/or
- after carrying out the detection of the interior volumes, the bundle (B1, B2) is rotated about a specific angle about its longitudinal axis (L1) and subsequently the detection of the interior volumes is carried out again.

17. Method as in one of the preceding claims, **characterized in that** the test camera (TK) is positioned such that no test light (TL) specularly reflected at the front-face surface of the binding substance (BM) reaches the test camera (TK).

18. Method as in one of claims 5, 6, 8, 9, 10, 11 or 13, **characterized in that**
- the test wavelength µ differs from the check wavelength λ,
- in the optical path of the test light (TL) a wavelength-selective optical filter, in particular a bandpass or narrow band filter, is introduced which transmits light of the test wavelength µ at least at a percentage x1 and light of the check wavelength A maximally at a percentage x2, where x2 < 0.5 * x1, and
- in the optical path of the check light (TL) a wavelength-selective optical filter, in particular a bandpass or narrow band filter, is introduced, which transmits light of the check wavelength A at least at a percentage y1 and transmits light of the test wavelength µ at maximally a percentage y2, where y2 < 0.5 * y1, and step a) is carried out simultaneously or overlapping in time with step d) and/or step b) is carried out simultaneously with or overlapping in time with step e).

19. Method as in one of claims 1 to 18, **characterized in that** as the check light source (PQ3) such a light source (PQ3) is utilized that comprises a plurality or a multiplicity of single light sources (ELQ), wherein each single light source is realized by one light emitting diode each.

20. Method as in claim 19, **characterized in that**, with the exception of a possible central recess clearance (A), there is no nonluminous region within the envelope which, viewed from any selected point of the front surface (SF1, SF2), appears amidst an aperture angle (φ) that is greater than 10° or greater than 5° or greater than 3°.

21. Method as in one of claims 1 to 20, **characterized in that** as the check light source (PQ1, PQ3) is utilized a light source (PQ1, PQ3) with a recess clearance (A) or a penetration (A) about which the check light source (PQ1, PQ3) extends annularly or in the form of a circular toroid.

22. Method as in claim 21, **characterized in that** the check camera (PK) is positioned such that it views the front surface (SF2) through the penetration (A) or the recess clearance (A).

## Revendications

1. Moteur Procédé pour détecter les espaces intérieurs (H) de fibres creuses non obstruées (F) qui font partie d'un faisceau (B1, B2) de fibres creuses (F), dans lequel
- le faisceau (B1, B2) présente une face avant (SF1, SF2) et une face arrière (HF1, HF2),
- les fibres creuses (F) sont constituées d'un premier matériau, en particulier de matière plastique telle que la polysulfone ou un autre polymère, et s'étendent de la face avant (SF1, SF2) à au moins la face arrière (HF1, HF2) du faisceau (B1, B2),
- la face avant (SF1, SF2) est formée conjointement par les faces périphériques avant (SR) des fibres creuses (F) et la surface avant d'une masse de liant (BM),
- qui fait également partie du faisceau (B1, B2) et est constituée d'un second matériau, en particulier d'une matière plastique telle que de la résine de polyuréthane ou du polyuréthane,
- qui se trouve dans la zone située entre la face avant (SF1, SF2) et la face arrière (HF1, HF2) entre les fibres creuses (F)
- et dans laquelle les fibres creuses (F) sont incorporées au moins dans cette zone,
- et la face avant de la masse de liant (BM) est suffisamment lisse pour que la masse de liant (BM) réfléchisse de manière au moins partiellement spéculaire et au plus partiellement diffuse la lumière rayonnée vers la face avant (SF1, SF2),
**caractérisé par** les étapes suivantes:
d) la face avant (SF1, SF2) est éclairée au moyen d'une source lumineuse d'examen (PQ1, PQ2) qui est constituée d'une source lumineuse d'examen unique ou d'une pluralité de sources lumineuses d'examen uniques émettant leur lumière de manière non directionnelle dans un demi-espace situé au-dessous de la source lumineuse d'examen (PQ1), et dans lequel une source lumineuse d'examen (PQ1, PQ2) est utilisée en tant que source lumineuse d'examen (PQ1, PQ2) qui, vue dans sa totalité à partir de chaque point de la face avant (SF1, SF2), forme une enveloppe apparaissant sous un angle d'ouverture (alpha) d'au moins 60° ou d'au moins 35° ou d'au moins 30° et qui génère la lumière d'examen (PL1, PL2, PL3),
e) la lumière d'examen (PL1, PL2, PL3) est détectée au moyen d'une caméra d'examen (PK) après sa réflexion spéculaire sur la surface avant de la masse de liant (BM) et une image de lumière spéculaire (GLB1, GLB2) de la surface avant (SF1, SF2) est ainsi générée au moyen de la caméra d'examen (PK), image dans laquelle les espaces intérieurs (H) de fibres non obstruées (F) apparaissent plus foncés que la surface avant de la masse de liant (BM) et en particulier également plus foncés que les espaces intérieurs de fibres creuses (F) obstruées par une masse de liant (BM) dans la région de la face avant (SF1, SF2),
f) les images (H') des espaces intérieurs (H) de fibres creuses non obstruées (F) sont automatiquement détectées ou détectées et comptées par un traitement d'image sur la base dudit obscurcissement dans l'image de lumière spéculaire (GLB1, GLB2).

2. Procédé selon la revendication 1, **caractérisé en ce que**, pour détecter les faces périphériques avant (SR) de fibres creuses (F), les fibres creuses (F) réfléchissent de manière diffuse sur leurs surfaces périphériques (SR) la lumière de test (TL) rayonnée vers la face avant (SF1, SF2), avec une première albédo A1, et la masse de liant (BM) réfléchit de manière diffuse sur la face avant (SF1, SF2) la lumière de test (TL) avec une seconde albédo A2 qui est inférieure à la première albédo A1, de manière à ce que A1 > A2, dans lequel
- soit après le procédé selon la revendication 1,
- soit avant le procédé selon la revendication 1,
- soit simultanément au procédé selon la revendication 1,
- soit de manière se chevauchant dans le temps avec le procédé selon la revendication 1, les étapes suivantes sont effectuées :
a) la face avant (SF1, SF2) est éclairée au moyen d'une source lumineuse de test (TQ) constituée d'une ou de plusieurs sources lumineuses de test individuelles et générant une lumière de test (TL),
b) la lumière de test (TL) est détectée au moyen d'une caméra de test (TK) après sa réflexion diffuse sur la face avant (SF1, SF2) et une image de lumière diffuse (DLB) de la face avant (SF1, SF2) est ainsi générée, dans laquelle les faces périphériques avant (SR) des fibres creuses (F) apparaissent plus claires que la masse de liant (BM) en raison du fait que A1 > A2,
c) les images (SR") des faces périphériques avant (SR) des fibres creuses (F) sont automatiquement détectées ou détectées et comptées par traitement d'image sur la base dudit éclaircissement dans l'image de lumière diffuse (DLB).

3. Procédé selon la revendication 2, **caractérisé en ce que** le faisceau (B1, B2) de fibres creuses (F) est soumis au procédé selon la revendication 1, ainsi qu'au procédé selon la revendication 2, et **en ce que** les résultats des procédés selon la revendication 1 et la revendication 2 sont comparés ou combinés les uns aux autres.

4. Procédé selon les revendications 1 à 3, **caractérisé en ce que**
- le nombre des fibres creuses (F) obstruées par la masse de liant (BM) est déterminé en soustrayant le nombre de fibres creuses non obstruées (F) déterminé dans l'image de lumière spéculaire (GLB1, GLB2) au nombre de fibres creuses (F) déterminé dans l'image de lumière diffuse (DLB), ou
- la proportion relative des fibres creuses (F) non obstruées par la masse de liant (BM) par rapport au nombre total de fibres creuses (F) est déterminée en divisant le nombre de fibres creuses (F) non obstruées déterminé dans l'image de lumière spéculaire (GLB1, GLB2) par le nombre de fibres creuses (F) déterminé dans l'image de lumière diffuse (DLB), ou
- la proportion relative des fibres creuses (F) obstruées par la masse de liant (BM) par rapport au nombre total de fibres creuses (F) est déterminée en divisant la différence entre le nombre de fibres creuses (F) déterminé dans l'image de lumière diffuse (DLB) et le nombre de fibres creuses non obstruées (F) déterminé dans l'image de lumière spéculaire (GLB1, GLB2) par le nombre de fibres creuses (F) déterminé dans l'image de lumière diffuse (DLB).

5. Procédé selon l'une quelconque des revendications 1 ou 2 ou selon les revendications 1 et 2, **caractérisé en ce que**
- la lumière de test est une lumière ayant une longueur d'onde de test µ, et/ou
- la lumière d'examen est une lumière ayant une longueur d'onde d'examen λ.

6. Procédé selon la revendication 5, **caractérisé en ce que** la longueur d'onde de test µ est différente de la longueur d'onde d'examen λ et/ou **en ce que** la lumière de test (TL) et la lumière d'examen (PL1, PL2) sont polarisées différemment.

7. Procédé selon l'une quelconque des revendications précédentes, **caractérisé en ce que**
- la lumière d'examen (PL1, PL2) est rayonnée sous un angle d'élévation (ε 1, ε 2, ε 3) d'au moins 60° ou d'au moins 75° sur la face avant (SF1, SF2) et/ou
- la lumière de test (TL) est rayonnée sur la face avant (S) sous un angle d'élévation (β) d'au plus 60° ou d'au plus 45° ou d'au plus 30° ou d'au plus 20°.

8. Procédé selon la revendication 5 ou 6, **caractérisé en ce que**
- le second matériau et la longueur d'onde d'examen λ sont sélectionnés de manière à ce que le coefficient d'extinction de la masse de liant (BM) à la longueur d'onde d'examen λ soit supérieur à 0,1/cm ou supérieur à 1/cm ou supérieur à 10/cm, et/ou **en ce que**
- le second matériau et la longueur d'onde d'examen µ sont sélectionnés de manière à ce que le coefficient d'extinction de la masse de liant (BM) à la longueur d'onde de test µ soit supérieur à 0,1/cm ou supérieur à 1/cm ou supérieur à 10/cm.

9. Procédé selon l'une quelconque des revendications 5, 6 ou 8, **caractérisé en ce que** le premier matériau, le second matériau et la longueur d'onde de test µ sont sélectionnés de manière à ce que la première albédo A1 à la longueur d'onde de test µ soit supérieure à la seconde albédo A2 d'au moins un facteur 1,1 ou d'au moins un facteur 1,5 ou d'au moins un facteur 2.

10. Procédé selon l'une quelconque des revendications 5, 6, 8 ou 9, **caractérisé en ce que** la longueur d'onde d'examen λ et la longueur d'onde de test µ sont sélectionnées de manière à ce qu'elles soient identiques ou sont sélectionnées de manière à ce qu'elles diffèrent de moins de 10% ou de moins de 1%.

11. Procédé selon l'une quelconque des revendications 5, 6, 8, 9 ou 10, **caractérisé en ce que** la longueur d'onde d'examen λ est comprise entre 360 nm et 380 nm et/ou **en ce que** la longueur d'onde de test µ est comprise entre 360 nm et 380 nm.

12. Procédé selon l'une quelconque des revendications précédentes, **caractérisé en ce que** la caméra d'examen (PK) et la caméra de test (TK) sont identiques.

13. Procédé selon l'une quelconque des revendications 5, 6, 8, 9 ou 11, **caractérisé en ce que**
- un filtre passe-bande optique, en particulier un filtre à bande étroite, ou un autre filtre optique sélectif en longueur d'onde est utilisé, celui-ci étant transparent à une lumière ayant la longueur d'onde de test µ et étant inséré entre le faisceau (B1, B2) et la caméra de test (TK) dans le chemin optique de la lumière de test (TL) et/ou
- un filtre passe-bande optique, en particulier un filtre à bande étroite, ou un autre filtre optique sélectif en longueur d'onde est utilisé, celui-ci étant transparent à une lumière ayant la longueur d'onde d'examen λ et étant inséré entre le faisceau (B1, B2) et la caméra d'examen (PK) dans le chemin optique de la lumière d'examen (PL1, PL2).

14. Procédé selon l'une quelconque des revendications précédentes, **caractérisé en ce que**
- un filtre optique qui présente une transmission maximale à une longueur d'onde comprise entre 350 nm et 380 nm et est opaque à une longueur d'onde de 460 nm ou présente une transmission au plus égale à 50% ou au plus égale à 10% de la transmission maximale est introduit entre le faisceau (B1, B2) et la caméra de test (TK) dans le chemin optique de la lumière de test (TL),
- et/ou un filtre optique qui présente une transmission maximale à une longueur d'onde comprise entre 350 nm et 380 nm et est opaque à une longueur d'onde de 460 nm ou présente une transmission au plus égale à 50 % ou au plus égale à 10 % de la transmission maximale est introduit entre le faisceau (B1, B2) et la caméra d'examen (PK) dans le chemin optique de la lumière d'examen (PL1, PL2).

15. Procédé selon l'une quelconque des revendications précédentes, **caractérisé en ce que**
- les fibres creuses (F) sont constituées de polysulfone ou principalement de polysulfone ou d'un polymère ou principalement d'un polymère ou d'une première matière plastique, et/ou
- la masse de liant (BM) est constituée de polyuréthane ou principalement de polyuréthane ou de résine de polyuréthane ou principalement de résine de polyuréthane ou d'une seconde matière plastique.

16. Procédé selon l'une quelconque des revendications précédentes, **caractérisé en ce que**
- après l'exécution de la détection des faces périphériques avant, le faisceau est mis en rotation d'un angle déterminé autour de son axe longitudinal, et la détection des faces périphériques avant est ensuite de nouveau effectuée, et/ou
- après l'exécution de la détection des espaces intérieurs, le faisceau (B1, B2) est mis en rotation d'un angle déterminé autour de son axe longitudinal (L1) et la détection des espaces intérieurs est de nouveau effectuée.

17. Procédé selon l'une quelconque des revendications précédentes, **caractérisé en ce que** la caméra de test (TK) est disposée de manière à ce qu'aucune lumière de test (TL) réfléchie de manière spéculaire sur la face avant de la masse de liant (BM) n'atteigne la caméra de test (TK).

18. Procédé selon l'une des revendications 5, 6, 8, 9, 10, 11 ou 13, **caractérisé en ce que**
- la longueur d'onde de test µ est différente de la longueur d'onde d'examen λ,
- un filtre optique sélectif en longueur d'onde, en particulier un filtre passe-bande ou à bande étroite, est introduit dans le chemin optique de la lumière de test (TL), lequel filtre transmet une lumière ayant la longueur d'onde de test µ à au moins un pourcentage x1 et transmet une lumière ayant la longueur d'onde d'examen λ à au plus un pourcentage x2, où x2 < 0,5 * x1, et
- un filtre optique sélectif en longueur d'onde, en particulier un filtre passe-bande ou à bande étroite, est introduit dans le chemin optique de la lumière d'examen (TL), lequel filtre transmet une lumière ayant la longueur d'onde d'examen λ à au moins un pourcentage y1 et transmet une lumière ayant la longueur d'onde de test µ à au plus un pourcentage y2, où y2 < 0,5 * y1, et l'étape a) est effectuée en même temps ou en se chevauchant avec l'étape d) et/ou l'étape b) est effectuée en même temps ou en se chevauchant avec l'étape e).

19. Procédé selon l'une quelconque des revendications 1 à 18, **caractérisé en ce que** la source lumineuse (PQ3) utilisée en tant que source lumineuse d'examen (PQ3) est telle qu'elle présente une pluralité ou une multiplicité de sources lumineuses individuelles (ELQ), dans lequel chaque source lumineuse individuelle est formée par une diode électroluminescente.

20. Procédé selon la revendication 19, **caractérisé en ce que**, à l'intérieur de l'enveloppe, jusqu'à un éventuel évidement central (A), il n'existe aucune zone non éclairante apparaissant à partir d'un point quelconque de la face avant (SF1, SF2) sous un angle d'ouverture (ϕ) supérieur à 10° ou supérieur à 5° ou supérieur à 3°.

21. Procédé selon l'une quelconque des revendications 1 à 20, **caractérisé en ce qu'**on utilise en tant que source lumineuse d'examen (PQ1, PQ3) une source lumineuse (PQ1, PQ3) présentant un évidement (A) ou une perforation (A) autour duquel ou autour de laquelle la source lumineuse d'examen (PQ1, PQ3) s'étend de manière annulaire ou circulaire.

22. Procédé selon la revendication 21, **caractérisé en ce que** la caméra d'examen (PK) est disposée de manière à ce qu'elle observe à travers la perforation (A) ou à travers l'évidement (A) vers la face avant (SF2).
